# FASCICULE DE BREVET EUROPEEN

(11) **EP 3 441 259 B1**
(45) Date de publication et mention de la délivrance du brevet: **11.12.2019**
(21) Numéro de dépôt: 18186228.5
(22) Date de dépôt: 30.07.2018
(51) Int. Cl.: B60P 1/16, B60P 1/64

(54) **CHÂSSIS ROULANT ET CAISSE DE CHARGEMENT BASCULANTE ET AMOVIBLE**
FAHRBARES UNTERGESTELL UND SCHWENKBARE UND ENTFERNBARE LADEBEHÄLTER
MOBILE CHASSIS AND TILTING, REMOVABLE CARGO BODY

(30) Priorité: 11.08.2017 FR 1770854
(43) Date de publication de la demande: 13.02.2019
(73) Titulaire: BENALU, 62800 Lievin (FR)
(72) Inventeur: GRESSIER, Christophe, 59251 Allennes les Marais (FR); DERNONCOURT, Cédric, 62138 Billy Berclau (FR)
(74) Mandataire: Matkowska, Franck

(56) Documents cités:
- US-A- 5 040 849
- US-B1- 6 238 004

## Description

### Domaine technique

La présente invention concerne le domaine des caisses de chargement basculantes et amovibles, notamment de type bennes basculantes, c'est-à-dire des caisses de chargement qui sont aptes à être montées sur un châssis roulant, afin de pourvoir être transportées, qui sont aptes à pivoter par rapport au châssis roulant autour d'un axe de rotation horizontal, afin notamment de permettre le déchargement par gravité de leur contenu, et qui sont amovibles par rapport au châssis roulant de manière à pouvoir être retirées du châssis roulant et déposées au sol.

### Art antérieur

Pour le stockage et/ou transport de tout type de produits, et plus particulièrement, mais non exclusivement des produits en vrac ou semi-vrac tels que par exemple, et de manière non exhaustive, des matières agricoles en vrac (céréales, betteraves, pommes de terre, ...), des matériaux de terrassement ou déchets en vrac (terre, sable, gravas...), Il est connu d'utiliser une caisse de chargement, qui est montée pivotante sur un châssis roulant, et qui peut être basculée vers le haut et vers l'arrière par rapport au châssis roulant, par exemple au moyen d'au moins un vérin hydraulique, de manière à permettre son déchargement par gravité du produit.

De manière non exhaustive, le châssis roulant peut par exemple être le châssis d'un véhicule porteur, ou le châssis d'une remorque ou semi-remorque.

La caisse de chargement basculante peut par exemple être une benne basculante ouverte en partie supérieure pour son chargement par le dessus ou peut être un conteneur fermé, ou une citerne ou toute autre carrosserie basculante.

En fonction de la saisonnalité de l'activité, le type de caisse de chargement devant être utilisée peut varier en fonction notamment de la nature des produits transportés. Par exemple, dans le domaine des travaux publics, on est amené à utiliser des caisses de plus petite hauteur pour leur chargement par le haut avec une pelleteuse. En outre, dans ce domaine les graviers ou gravats transportés dans une caisse de chargement engendrent des phénomènes d'abrasion importants, ce qui oblige à utiliser une caisse de chargement plus lourde dont le fond et les côtés ont été renforcés pour résister à cette abrasion. Dans le domaine du transport grand volume, on cherche à optimiser le rapport poids de la caisse /volume de chargement, en utilisant des caisses de chargement qui sont plus légères tout en présentant un volume de chargement important. Dans le domaine environnemental, le transport de déchets ou ferrailles impose l'utilisation de caisses de chargement renforcées. Enfin le type de porte arrière d'une caisse pour son déchargement peut également varier en fonction du site de déchargement.

Par conséquent, afin notamment de pouvoir utiliser les différents types de caisses de chargement connus, il est particulièrement utile de pouvoir monter de manière amovible une caisse de chargement basculante sur un châssis roulant, afin de pourvoir facilement changer de type de caisse de chargement et utiliser une caisse de chargement adaptée.

Le brevet américain US 5 040 849 divulgue un exemple de caisse de chargement, de type benne basculante, pouvant être montée de manière amovible et basculante sur un châssis roulant et pouvant être retirée du châssis roulant pour être déposée au sol en reposant sur des béquilles.

Pour monter la caisse de chargement sur le châssis, on positionne le châssis roulant sous la caisse de chargement, qui repose sur ses béquilles en étant supportée en hauteur par rapport au sol. Puis on lève verticalement, au moyen de deux vérins hydrauliques, le châssis par rapport à ses roues de manière à décoller du sol la caisse de chargement et ses béquilles. Ensuite, la caisse de chargement comportant à l'arrière un axe d'articulation, on couple le châssis à cet axe d'articulation au moyen d'une pièce pivotante à fonction de verrou, qui est actionnée par un vérin. Cette pièce pivotante à fonction de verrou permet de solidariser le châssis à l'axe d'articulation arrière de la caisse de chargement, avec un degré de liberté en rotation de la caisse de chargement par rapport au châssis. A l'avant et sous la caisse de chargement, le châssis comporte un vérin de bennage pour le basculement vers le haut et vers l'arrière de la caisse de chargement par rapport au châssis.

Dans cette solution technique, un opérateur est contraint de coupler manuellement la tige mobile du vérin de bennage à la caisse de chargement, par exemple au moyen d'une liaison mécanique de type goupille.

Pour déposer au sol la caisse de chargement portée par le châssis roulant, on commande le vérin actionnant la pièce pivotante à fonction de verrou arrière, de manière à désaccoupler le châssis et l'axe d'articulation de la caisse de chargement. Ensuite un opérateur est contraint de désaccoupler à la main la caisse de chargement et la tige du vérin hydraulique de levage. Puis on abaisse verticalement le châssis par rapport à ses roues, de manière à poser au sol la caisse de chargement par l'intermédiaire de ses béquilles. Ensuite on fait rouler au sol le châssis roulant pour le retirer du dessous de la caisse de chargement posée au sol sur ses béquilles.

La solution technique susvisée décrite dans ce brevet américain US 5 040 849 présente au moins les inconvénients suivants.

Cette solution technique nécessite de manière préjudiciable des interventions manuelles d'un opérateur pour coupler la tige du vérin de bennage à la caisse de chargement et pour désaccoupler la tige du vérin de bennage et la caisse de chargement. Or ces interventions manuelles sont fastidieuses et peuvent de surcroît présenter un danger corporel pour l'opérateur.

Le couplage et le désaccouplement de l'axe de rotation arrière de la caisse de chargement avec le châssis nécessitent la mise en œuvre d'un vérin pour faire pivoter le verrou arrière, ce qui d'une part augmente le coût de la solution technique et rend la solution moins fiable et moins robuste dans le temps, ledit vérin d'actionnement du verrou arrière pivotant pouvant être déficient.

Lors du basculement vers le haut et vers l'arrière de la caisse de chargement, le poids de cette caisse de chargement, et le cas échéant le poids de son contenu, est de manière préjudiciable repris par la pièce pivotante à fonction de verrou arrière, ce qui rend cette solution peu robuste mécaniquement et susceptible d'engendrer un déverrouillage accidentel de la caisse de chargement par rapport au châssis sous l'effet du poids de cette caisse de chargement, et le cas échéant du poids de son contenu. En pratique, cette solution technique n'est donc pas adaptée pour des caisses de chargement de grand volume.

Enfin, les deux vérins pour la montée et l'abaissement du châssis sont dédiés uniquement à cette fonction, ce qui rend cette solution onéreuse et augmente le poids mort sur le châssis roulant.

### Objectif de l'invention

La présente invention vise à proposer une nouvelle solution technique pour monter de manière amovible une caisse de chargement basculante sur un châssis roulant, afin de pourvoir la transporter jusqu'à une zone de stockage et/ou de déchargement, et pour retirer d'un châssis roulant une caisse de chargement basculante en la déposant au sol, laquelle solution technique permet de pallier tout au partie des inconvénients susvisés de la solution technique précédemment décrite de l'art antérieur.

### Résumé de l'invention

L'invention a ainsi pour premier objet un ensemble de chargement comportant un châssis roulant et une caisse de chargement, qui est apte à être montée de manière amovible sur le châssis roulant en étant articulée en rotation par rapport au châssis roulant autour d'un axe de rotation horizontal ; ledit châssis roulant est équipé d'au moins un vérin, qui comporte une tige mobile, et qui permet, lorsque la caisse de chargement est montée sur le châssis et est couplée à la tige mobile du vérin, de faire pivoter la caisse de chargement par rapport au châssis autour dudit axe de rotation horizontal ; ledit ensemble comportant en outre au moins l'une des caractéristiques techniques (a) ou (b) suivantes:
(a) ledit ensemble comprend des premiers moyens de couplage autoverrouillables, qui comportent des premiers moyens de verrouillage automatique, lesdits premiers moyens de couplage étant aptes à prendre une position de fermeture verrouillée, sous l'effet d'une pression exercée dans une direction de couplage (C) et avec un verrouillage automatique dans leur position de fermeture par les premiers moyens de verrouillage, les premiers moyens de couplage étant fixés à la caisse de chargement ou étant fixés à la tige du vérin, de telle sorte que la tige du vérin est apte à être déplacée, et de préférence à être sortie, de manière à exercer, sur les premiers moyens de couplage, une pression dans la direction de couplage (C) les amenant automatiquement dans leur position de fermeture verrouillée, dans laquelle ils couplent en rotation la tige du vérin à la caisse de chargement, les premiers moyens de couplage étant en outre déverrouillables, de manière à pouvoir désaccoupler la tige du vérin et la caisse de chargement en déplaçant la tige du vérin par rapport à la caisse de chargement, et ledit ensemble comprend des deuxièmes moyens de couplage qui permettent de coupler en rotation autour dudit axe de rotation horizontal, et de manière amovible, la caisse de chargement au châssis roulant (2),
   ou
(b) ledit ensemble comprend des premiers moyens de couplage qui permettent de coupler en rotation et de manière amovible la tige du vérin à la caisse de chargement, et des deuxièmes moyens de couplage autoverrouillables, qui comportent des deuxièmes moyens de verrouillage, lesdits deuxièmes moyens de couplage étant aptes à prendre une position de fermeture verrouillée, sous l'effet d'une pression exercée dans une direction de couplage (C) et avec un verrouillage automatique dans leur position de fermeture par les deuxièmes moyens de verrouillage, les deuxièmes moyens de couplage étant fixés à la caisse de chargement ou étant fixés au châssis roulant de telle sorte que le châssis roulant est apte à être déplacé de manière à exercer sur les deuxièmes moyens de couplage une pression dans la direction de couplage (C) les amenant automatiquement dans leur position de fermeture verrouillée, dans laquelle ils couplent en rotation autour dudit axe de rotation horizontal la caisse de chargement au châssis roulant, les deuxièmes moyens de couplage étant en outre déverrouillables, de manière à pouvoir désaccoupler le châssis roulant et la caisse de chargement en déplaçant le châssis roulant par rapport à la caisse de chargement.

Dans une variante préféré de réalisation, l'ensemble de chargement de l'invention comporte les deux caractéristiques techniques (a) et (b) susvisées.

De manière facultative selon l'invention, l'ensemble de chargement de l'invention peut comporter les caractéristiques techniques optionnelles ci-après, prises isolément ou en combinaison :
- Les deuxièmes moyens de couplage sont fixés à la caisse de chargement ou sont fixés au châssis roulant, de telle sorte que ladite pression dans la direction de couplage (C) peut être exercée sur les deuxièmes moyens de couplage en déplaçant en hauteur le châssis roulant et le désaccouplement du châssis roulant et de la caisse de chargement peut être obtenu, une fois les deuxièmes moyens de couplage déverrouillés, en abaissant le châssis roulant.
- Ledit ensemble de chargement comporte au moins la caractéristique technique (a) et les premiers moyens de couplage sont fixés à la caisse de chargement.
- La tige du vérin comporte un axe d'articulation et les premiers moyens de couplage comportent au moins une paire de mâchoires, qui sont fixées à la caisse de chargement, qui sont articulées en rotation entre une position d'ouverture et une position de fermeture autour de l'axe d'articulation de la tige du vérin, et qui sont aptes à pivoter automatiquement de leur position d'ouverture à leur position de fermeture sous l'effet d'une pression orientée dans la direction de couplage (C) et exercée au moyen de l'axe d'articulation de la tige du vérin, lesdits premiers moyens de verrouillage permettant de verrouiller automatiquement les mâchoires en position de fermeture autour de l'axe d'articulation de la tige du vérin.
- Ledit ensemble de chargement comporte au moins la caractéristique technique (a) et les premiers moyens de couplage sont fixés à la tige du vérin.
- La caisse de chargement comporte un axe d'articulation et les premiers moyens de couplage comportent au moins une paire de mâchoires, qui sont fixées à la tige du vérin, qui sont articulées en rotation entre une position d'ouverture et une position de fermeture autour de l'axe d'articulation de la caisse de chargement, et qui sont aptes à pivoter automatiquement de leur position d'ouverture à leur position de fermeture sous l'effet d'une pression orientée dans la direction de couplage (C) et exercée au moyen de l'axe d'articulation de la caisse de chargement, lesdits premiers moyens de verrouillage permettant de verrouiller automatiquement les deux mâchoires en position de fermeture autour dudit axe d'articulation.
- Les premiers moyens de couplage comportent au moins deux paires de mâchoires, qui sont espacées et alignées.
- Ledit ensemble de chargement comporte au moins la caractéristique technique (b), et les deuxièmes moyens de couplage sont fixés à la caisse de chargement.
- Le châssis roulant comporte au moins un axe d'articulation définissant ledit axe de rotation horizontal de la caisse de chargement par rapport au châssis roulant ; les deuxièmes moyens de couplage comportent au moins une paire de mâchoires, qui sont fixées à la caisse de chargement, qui sont articulées en rotation entre une position d'ouverture et une position de fermeture autour de l'axe d'articulation du châssis roulant, et qui sont aptes à pivoter automatiquement de leur position d'ouverture à leur position de fermeture sous l'effet d'une pression orientée dans la direction de couplage (C) et exercée au moyen de l'axe d'articulation du châssis roulant, lesdits premiers moyens de verrouillage permettant de verrouiller automatiquement les deux mâchoires en position de fermeture autour de l'axe d'articulation du châssis roulant.
- Ledit ensemble de chargement comporte au moins la caractéristique technique (b), et les deuxièmes moyens de couplage sont fixés au châssis roulant.
- La caisse de chargement comporte au moins un axe d'articulation définissant ledit axe de rotation horizontal de la caisse de chargement par rapport au châssis roulant, et les deuxièmes moyens de couplage comportent au moins une paire de mâchoires, qui sont fixées au châssis roulant, qui sont articulées en rotation entre une position d'ouverture et une position de fermeture autour de l'axe d'articulation de la caisse de chargement, et qui sont aptes à pivoter automatiquement de leur position d'ouverture à leur position de fermeture sous l'effet d'une pression orientée dans la direction de couplage (C) et exercée au moyen de l'axe d'articulation de la caisse de chargement ; lesdits premiers moyens de verrouillage permettent de verrouiller automatiquement les deux mâchoires en position de fermeture autour de l'axe d'articulation du châssis roulant.
- Les deuxièmes moyens de couplage comportent au moins deux paires de mâchoires, qui sont espacées et alignées.
- Les mâchoires sont maintenues élastiquement en position d'ouverture lorsqu'elles ne sont plus verrouillées en position de fermeture.
- Les premiers moyens de verrouillage et/ou les deuxièmes moyens de verrouillage comportent un verrou pivotant, qui est apte à être entraîné en rotation jusqu'à une position de verrouillage par une première mâchoire lorsque les mâchoires pivotent de leur position d'ouverture à leur position de fermeture, et qui permet dans cette position de verrouillage un blocage en rotation des deux mâchoires en position de fermeture ; le verrou peut être actionné en rotation, notamment manuellement, jusque dans une position de déverrouillage dans laquelle les deux mâchoires ne sont pas bloquées en rotation.
- La deuxième mâchoire comporte une gorge de verrouillage, dans lequel le verrou pivotant embarque une pige, qui est coulissante et rappelée élastiquement en position d'engagement par un moyen de rappel élastique, de type ressort de compression ; le verrou pivotant en combinaison avec le moyen de rappel élastique de la pige est apte, au cours de sa rotation vers sa position de verrouillage, à entraîner la pige jusque dans la gorge de verrouillage lorsque les mâchoires pivotent de leur position d'ouverture à leur position de fermeture ; la pige, une fois positionnée dans la gorge de verrouillage, permet de solidariser en rotation le verrou et la deuxième mâchoire ; lorsque les mâchoires sont verrouillées, la pige peut être actionnée, notamment manuellement, de manière à coulisser en dehors de ladite gorge de verrouillage et le verrou peut être pivoté par rapport à la deuxième mâchoire de manière à déverrouiller en rotation les mâchoires.
- La deuxième mâchoire comporte également une gorge de déverrouillage, dans lequel le verrou pivotant en combinaison avec le moyen de rappel élastique de la pige est apte, au cours de sa rotation forcée permettant de déverrouiller les mâchoires, à entraîner la pige jusque dans la gorge de déverrouillage ; la pige, une fois positionnée dans la gorge de déverrouillage, permet de solidariser en rotation le verrou et la deuxième mâchoire, les deux mâchoires étant déverrouillées en rotation.
- Le verrou est équipé d'un moyen de rappel élastique, de type ressort de torsion, qui permet de faire pivoter le verrou en appui sur les deux mâchoires pour les maintenir en butée en position d'ouverture.
- Une fois les deux mâchoires verrouillées en position de fermeture, avec la pige positionnée dans la gorge de verrouillage de la deuxième mâchoire, la deuxième mâchoire (401) est verrouillée en rotation dans les deux sens par rapport au verrou, le verrou bloque en rotation la première mâchoire dans le sens de rotation de son ouverture et la première mâchoire bloque en rotation la deuxième mâchoire dans le sens de rotation de sa fermeture.
- Ledit ensemble de chargement comporte des béquilles permettant de supporter au sol la caisse de chargement, en la surélevant d'une hauteur suffisante pour permettre un positionnement du châssis roulant sous la caisse de chargement supportée par lesdites béquilles.
- La caisse de chargement et le châssis roulant comportent des moyens de centrage, qui permettent un centrage longitudinal et un centrage latéral de la caisse de chargement sur le châssis roulant.
- Ledit ensemble de chargement comporte les deux caractéristiques techniques (a) et (b).

L'invention a également pour objet un procédé de pose et de couplage d'une caisse de chargement sur un châssis roulant, mis en œuvre au moyen d'un ensemble de chargement comportant les deux caractéristiques (a) et (b) susvisées, et la caisse de chargement étant posée sur béquilles, ledit procédé comportant les étapes successives suivantes :
- on positionne le châssis roulant sous la caisse de chargement, ledit châssis roulant étant en position basse ;
- on fait monter le châssis roulant en position haute, de manière à mettre en contact le châssis roulant avec les deuxièmes moyens de couplage fixés à la caisse de chargement ou à mettre en contact avec la caisse de chargement les deuxièmes moyens de couplage fixés au châssis roulant, lesquels deuxièmes moyens de couplage se verrouillent automatiquement en position de fermeture, de telle sorte que la caisse de chargement est couplée en rotation au châssis roulant autour dudit axe de rotation horizontal ;
- on désinstalle les béquilles supportant la partie de la caisse de chargement à proximité du ou des axes d'articulation ;

- on couple automatiquement la tige du vérin à la caisse de chargement, au moyen des premiers moyens de couplage, en commandant la sortie de la tige du vérin ;
- on désinstalle les béquilles supportant la partie de la caisse de chargement à proximité du vérin, et on commande la descente de la tige du vérin, la caisse de chargement reposant sur le châssis roulant ;
- on fait descendre le châssis roulant en position nominale intermédiaire de roulage entre les positions haute et basse.

Plus particulièrement, les opérations de montée et de descente du châssis roulant sont réalisées au moyen au moins de la suspension du châssis.

L'invention a également pour objet un procédé de désaccouplement et de dépose sur béquilles d'une caisse de chargement posée sur un châssis roulant, ledit procédé étant mis en œuvre au moyen d'un ensemble de chargement comportant les deux caractéristiques (a) et (b) susvisées, ladite caisse de chargement étant couplée en rotation à la tige du vérin au moyen des premiers moyens de couplage verrouillés dans leur position de fermeture, et ladite caisse de chargement étant couplée au châssis roulant au moyen des deuxièmes moyens de couplage verrouillés dans leur position de fermeture, ledit procédé comportant les étapes successives suivantes :
- on fait monter la partie du châssis roulant dans la région du vérin pour l'amener en position haute ;
- on installe des premières béquilles sous la caisse de chargement à proximité du vérin ;
- on déverrouille les premiers moyens de couplage ;
- on fait descendre ladite partie du châssis roulant dans la région du vérin pour l'amener en position basse de manière à désaccoupler la tige du vérin de la caisse de chargement, et jusqu'à ce que la caisse de chargement repose au sol sur les premières béquilles ;
- on fait monter la partie du châssis roulant dans la région du ou des axes d'articulation pour l'amener en position haute ;
- on installe des deuxièmes béquilles sous la caisse de chargement à proximité du ou des axes d'articulation ;
- on déverrouille les deuxièmes moyens de couplage ;
- on fait descendre ladite partie du châssis roulant dans la région du ou des axes d'articulation pour l'amener en position basse, de manière désaccoupler la caisse de chargement du châssis roulant, et jusqu'à ce que la caisse de chargement repose au sol sur les premières et deuxièmes béquilles,
- on déplace le châssis roulant, de manière à le dégager du dessous de la caisse de chargement posée sur les premières et deuxièmes béquilles.

Plus particulièrement, les opérations de montée et de descente du châssis roulant sont réalisées au moyen au moins de la suspension du châssis.

L'invention a pour autre objet un dispositif de couplage sur un axe d'articulation caractérisé en ce qu'il comporte :
- au moins une paire de mâchoires, qui sont articulées en rotation entre une position d'ouverture et une position de fermeture, et qui sont aptes à pivoter automatiquement de leur position d'ouverture à leur position de fermeture sous l'effet d'une pression orientée dans une direction de couplage (C) et exercée au moyen de l'axe d'articulation,
- des premiers moyens de verrouillage qui permettant de verrouiller automatiquement les deux mâchoires en position de fermeture autour de l'axe d'articulation et qui comportent un verrou pivotant (405a), qui est apte à être entraîné en rotation jusqu'à une position de verrouillage par une première mâchoire lorsque les mâchoires pivotent de leur position d'ouverture à leur position de fermeture, et qui permet dans cette position de verrouillage un blocage en rotation des deux mâchoires en position de fermeture, le verrou étant en outre apte à être actionné en rotation, notamment manuellement, jusque dans une position de déverrouillage dans laquelle les deux mâchoires ne sont pas bloquées en rotation.

De manière facultative selon l'invention, le dispositif de couplage de l'invention peut comporter les caractéristiques techniques optionnelles ci-après, prises isolément ou en combinaison :
- la deuxième mâchoire comporte une gorge de verrouillage, dans lequel le verrou pivotant embarque une pige, qui est coulissante et rappelée élastiquement en position d'engagement par un moyen de rappel élastique, de type ressort de compression ; le verrou pivotant en combinaison avec le moyen de rappel élastique de la pige est apte, au cours de sa rotation vers sa position de verrouillage, à entraîner la pige jusque dans la gorge de verrouillage lorsque les mâchoires pivotent de leur position d'ouverture à leur position de fermeture ; la pige, une fois positionnée dans la gorge de verrouillage, permet de solidariser en rotation le verrou et la deuxième mâchoire ; lorsque les mâchoires sont verrouillées, la pige peut être actionnée, notamment manuellement, de manière à coulisser en dehors de ladite gorge de verrouillage et le verrou peut être pivoté par rapport à la deuxième mâchoire de manière à déverrouiller en rotation les mâchoires.
- La deuxième mâchoire comporte également une gorge de déverrouillage ; le verrou pivotant en combinaison avec le moyen de rappel élastique de la pige est apte, au cours de sa rotation forcée permettant de déverrouiller les mâchoires, à entraîner la pige jusque dans la gorge de déverrouillage ; la pige, une fois positionnée dans la gorge de déverrouillage, permet de solidariser en rotation le verrou et la deuxième mâchoire, les deux mâchoires (étant déverrouillées en rotation.
- Une fois les deux mâchoires verrouillées en position de fermeture, avec la pige positionnée dans la gorge de verrouillage de la deuxième mâchoire, la deuxième mâchoire est verrouillée en rotation dans les deux sens par rapport au verrou, le verrou bloque en rotation la première mâchoire dans le sens de rotation de son ouverture et la première mâchoire bloque en rotation la deuxième mâchoire dans le sens de rotation de sa fermeture.

- Les mâchoires sont maintenues élastiquement en position d'ouverture lorsqu'elles ne sont plus verrouillées en position de fermeture.
- Le verrou est équipé d'un moyen de rappel élastique, de type ressort de torsion, qui permet de faire pivoter le verrou en appui sur les deux mâchoires pour les maintenir en butée en position d'ouverture.
- Le dispositif selon l'une quelconque des revendications comporte au moins deux paires de mâchoires, qui sont espacées et alignées.

L'invention a également pour objets une utilisation du dispositif de couplage susvisé pour coupler en rotation une caisse de chargement à une tige mobile d'un vérin équipant un châssis roulant et une utilisation du dispositif de couplage susvisé pour coupler en rotation une caisse de chargement à un châssis roulant.

### Brève description des figures

D'autres caractéristiques et avantages de l'invention apparaîtront plus clairement à la lecture de la description détaillée ci-après de plusieurs variantes de réalisation de l'invention, laquelle description détaillée est donnée à titre d'exemple non limitatif et non exhaustif de l'invention, et en référence aux dessins annexés sur lesquels :
- la figure 1 est une vue en perspective isométrique d'une variante de réalisation d'un ensemble de chargement de l'invention, la caisse de chargement basculante de cet ensemble étant posée sur le châssis roulant de type semi-remorque ;
- la figure 2 est une vue en perspective isométrique de la caisse de chargement de l'ensemble de la figure 1 ;
- la figure 3 est une vue en perspective isométrique du châssis roulant de l'ensemble de la figure 1 ;
- la figure 4 est une vue en perspective isométrique du châssis roulant de l'ensemble de la figure 1, attelé à un véhicule tracteur ;

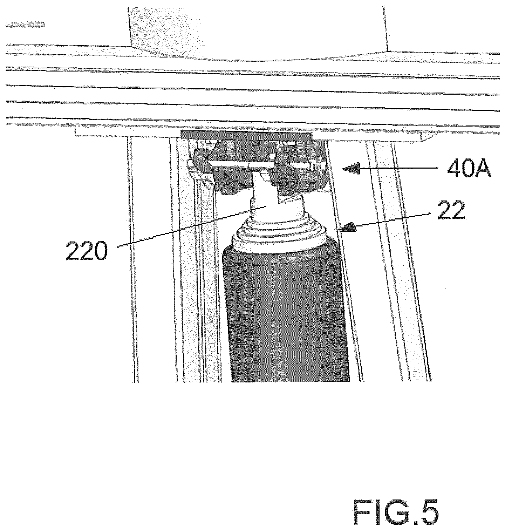

- la figure 5 est une vue de détail de la tige du vérin de bennage couplée en rotation à la caisse de chargement, au moyen d'un coupleur avant ;
- la figure 6 est une vue en perspective isométrique d'un exemple de coupleur arrière en position de fermeture verrouillée, permettant le couplage en rotation de la caisse de chargement sur un axe d'articulation arrière du châssis roulant ;
- la figure 7 est une vue en perspective isométrique d'un exemple de coupleur avant en position de fermeture verrouillée, permettant le couplage en rotation de la caisse de chargement sur un axe d'articulation à l'extrémité de la tige du vérin de bennage ;
- les figures 8A à 8F représentent de manière schématique les principales étapes mises en œuvre successivement pour déverrouiller manuellement un coupleur avant ou arrière et pour désaccoupler le coupleur d'un axe d'articulation ;
- Les figures 9A à 9D représentent de manière schématique les principales étapes mises en œuvre successivement pour coupler automatiquement un coupleur avant sur un axe d'articulation ;
- les figures 10A à 10G représentent de manière schématique les principales étapes successives de la séquence de pose et de couplage de la caisse de chargement de la figure 2 sur le châssis roulant de la figure 3 ;
- les figures 11A à 11F représentent de manière schématique les principales étapes successives de la dépose au sol de la caisse de chargement portée par le châssis roulant.

### Description détaillée

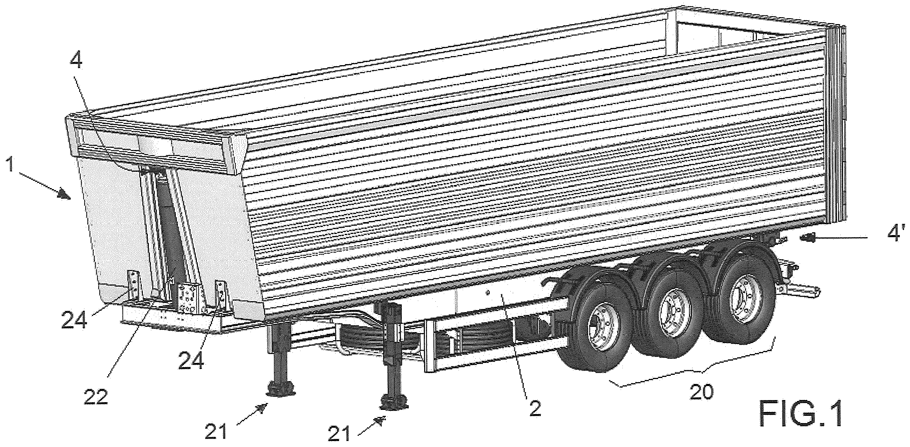

On a représenté sur la figure 1 un exemple de caisse de chargement 1 basculante, de type benne, montée et couplée de manière amovible sur un châssis roulant 2.

Dans cet exemple particulier, la caisse de chargement 1 a une forme sensiblement parallélépipédique, et est ouverte en partie supérieure pour son chargement par le dessus. Ce type de caisse de chargement 1 peut être utilisé pour le transport et/ou le stockage de tout type de produit, et plus particulièrement, mais pas exclusivement, est adapté pour le stockage et/ou transport de produits en vrac ou semi-vrac tels que par exemple, et de manière non exhaustive, des matières agricoles en vrac (céréales, betteraves, pommes de terre, ...), des matériaux de terrassement ou déchets en vrac (terre, sable, gravas...).

Dans le cadre de l'invention, la caisse de chargement 1 n'est pas nécessairement de forme sensiblement parallélépipédique, mais peut avoir une toute autre forme, et par exemple une forme sensiblement cylindrique. La caisse de chargement 1 peut être un conteneur fermé et peut être destinée au transport et/ou stockage de tout type de produits.

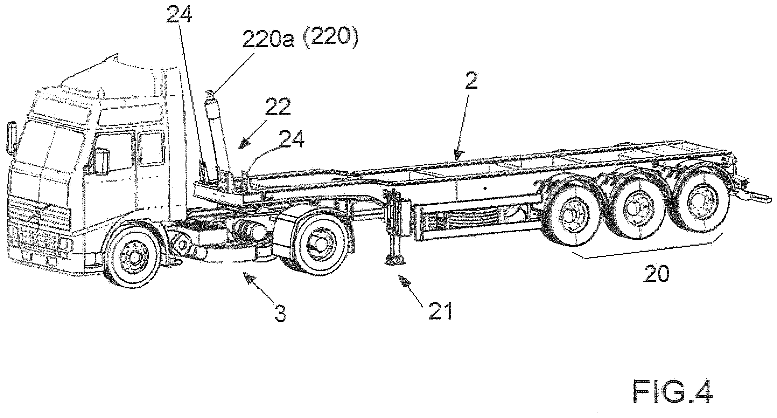

Dans l'exemple particulier de la figure 1, le châssis roulant 2 est une semi-remorque, qui est adaptée pour être tractée par un véhicule tracteur 3 (figure 4), qui est supporté par un train roulant arrière 20, et qui est équipé à l'avant d'une paire de béquilles 21 rétractables, utilisées lors des opérations de dételage du châssis roulant 2.

L'invention n'est pas limitée à cette structure particulière de châssis roulant 2, de type semi-remorque. Plus généralement, dans le cadre de l'invention, on désigne par « châssis roulant », toute structure porteuse apte à porter une caisse de chargement et pouvant rouler par rapport au sol, ladite structure porteuse pouvant être motrice ou tractée. Ainsi, le châssis roulant peut par exemple être le châssis d'un véhicule porteur, ou le châssis d'une remorque ou semi-remorque.

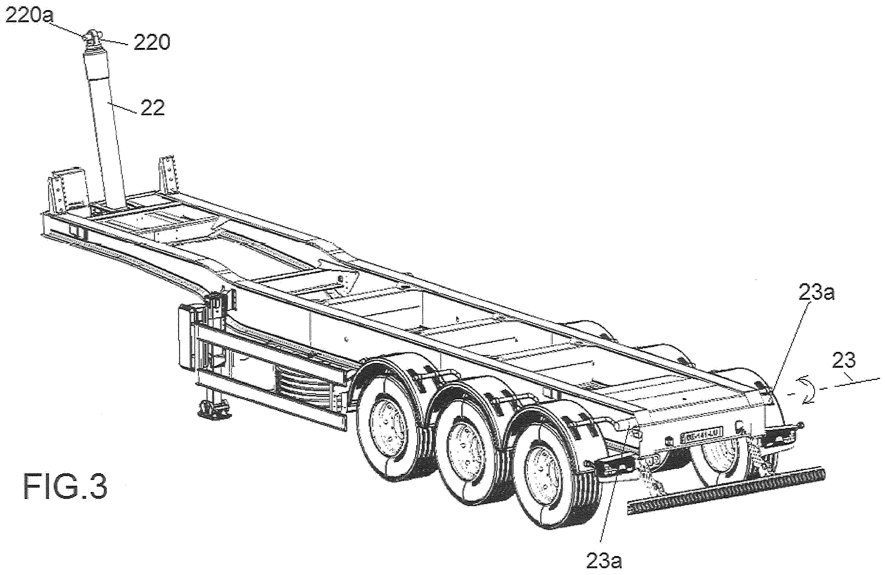

En référence à la figure 3, le châssis roulant 2 comporte à l'arrière deux axes d'articulation 23a horizontaux, qui orientés perpendiculairement à l'axe longitudinal avant/arrière de châssis, et qui sont alignés de manière à définir un axe de rotation horizontal 23. Ces deux axes d'articulation 23a fixes font avantageusement partie intégrante du châssis roulant 2 et permettent ainsi une reprise efficace par le châssis roulant 2 des efforts mécaniques de la caisse 1, notamment lors des opérations de bennage de cette caisse. Dans une autre variante, les deux axes d'articulation 23a peuvent être remplacés par un unique axe d'articulation fixe traversant de plus grande longueur, faisant partie intégrante du châssis 2.

En référence aux figures 1 et 3, le châssis roulant 2 comporte à l'avant un vérin de levage 22 central, télescopique simple effet, plus communément appelé vérin de bennage, et comportant une tige de vérin 220 orientée essentiellement verticalement. De manière usuelle, lorsque la caisse de chargement 1 est montée sur le châssis roulant 2, et lorsque la tige de vérin 220 est couplée à l'avant de la caisse de chargement 1, ce vérin 22 permet d'actionner le basculement en rotation de la caisse de chargement 1 par rapport au châssis 2 autour de l'axe de rotation arrière 23, afin de permettre le bennage de cette caisse 1.

Plus particulièrement, en référence à la figure 3, à son extrémité libre supérieure la tige 220 du vérin 22 comporte un axe d'articulation 220a horizontal et orienté perpendiculairement à l'axe longitudinal avant/arrière du châssis 2.

Le couplage mécanique de la caisse de chargement 1 et le châssis roulant 2 est réalisé au moyen de premiers moyens de couplage 4 à l'avant de la caisse 1, qui permettent un couplage en rotation amovible, automatique (c'est-à-dire sans manipulation manuelle) et autoverrouillable, de la caisse de chargement 1 avec l'axe 220a à l'extrémité de la tige de vérin 22, et au moyen de deuxièmes moyens de couplage 4' à l'arrière de la caisse 1, qui permettent un couplage en rotation amovible, automatique et autoverrouillable de la caisse de chargement 1 avec les axes d'articulation 23a du châssis roulant 2.

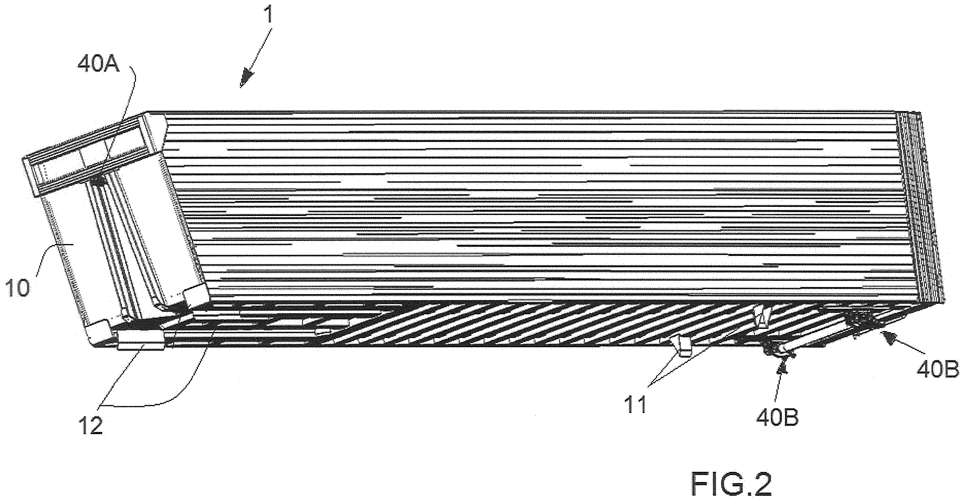

Plus particulièrement, dans la variante particulière de réalisation de la figure 2, les premiers moyens de couplage 4 comportent un coupleur 40A avant, qui est fixé, par exemple en étant boulonné, sur la paroi avant 10 de la caisse de chargement 1, et qui permet un couplage en rotation amovible, automatique et autoverrouillable, sur l'axe d'articulation 220a de la tige 220 du vérin de bennage 22. Les deuxièmes moyens de couplage 4' comportent deux coupleurs 40B arrière, qui sont fixés, par exemple en étant boulonnés, à l'arrière et sous la caisse de chargement 1, et qui permettent un couplage en rotation amovible, automatique et autoverrouillable, sur les deux axes d'articulation 23a du châssis roulant 2.

La structure et le fonctionnement de ces coupleurs 40A, 40B particuliers vont à présent être décrites plus en détails.

Dans la variante particulière de réalisation de la figure 2, la caisse de chargement est en outre équipée à l'avant de butées latérales 12 et à l'arrière de butée latérales 11, qui permettent un centrage latéral de la caisse de chargement 1 par rapport au châssis 2 lors de l'opération de pose de la caisse 1 sur le châssis 2.

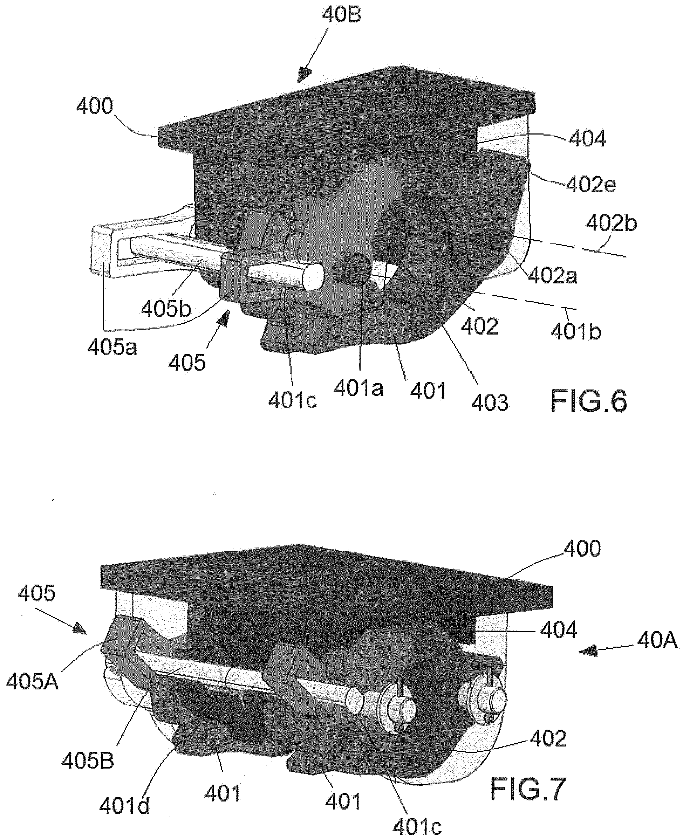

En référence à la figure 6, un coupleur arrière 40B comporte un palier 400 sur lequel sont montées deux mâchoires 401 et 402, qui sont articulées en rotation par rapport au palier 400, au moyen respectivement de deux axes d'articulation 401a et 402a définissant deux axes de rotation parallèles 401b, 402b. Ce palier 400 permet de fixer le coupleur 40B à la caisse de chargement 1.

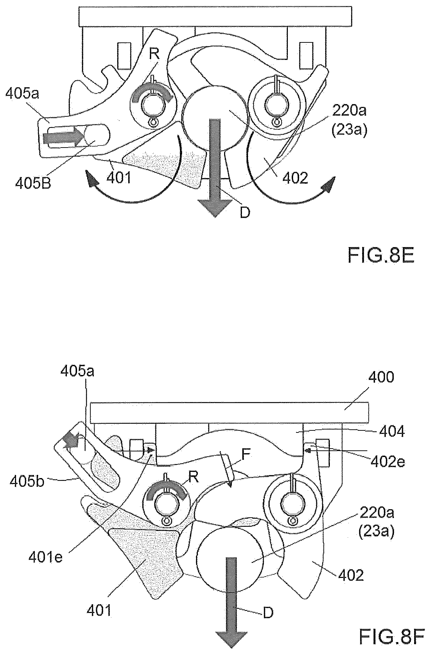

Sous le palier 400 est fixée une semelle 404 apte à coopérer avec une butée 401e, 402e de chaque mâchoire 401, 402, de manière à bloquer en rotation chaque mâchoire 402 en position d'ouverture (figure 8F).

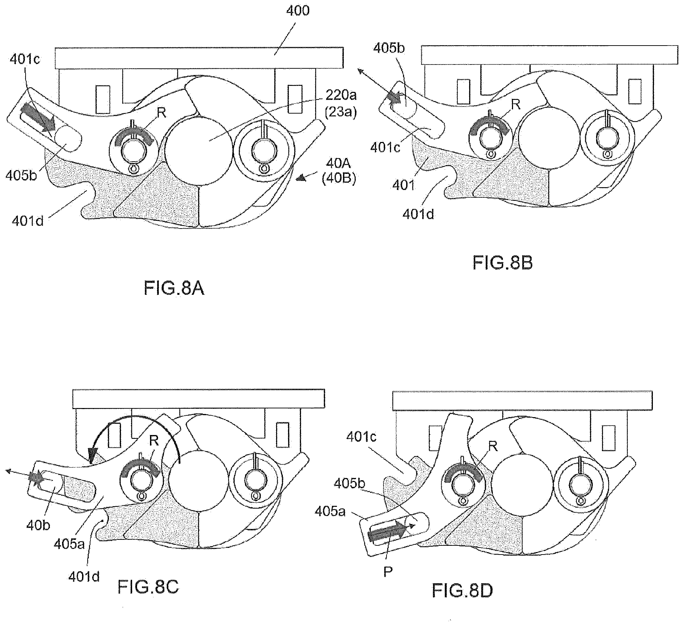

Le coupleur arrière 40B comporte en outre des moyens de verrouillage 405, qui ont pour fonction de verrouiller automatiquement les deux mâchoires 401 et 402 dans leur position de fermeture de la figure 6 ou 8A, dans laquelle elles délimitent entre elles un passage cylindrique 403 (figure 6) pour un axe.

Dans cette variante particulière de réalisation, ces moyens de verrouillage 405 comportent un verrou rotatif 405a, qui est articulé en rotation sur l'axe d'articulation 401a de la mâchoire 401, et sur lequel est montée une pige 405b embarquée.

L'axe de rotation de ce verrou 405a est équipé d'un ressort de torsion qui a pour fonction, en l'absence de contrainte, de rappeler élastiquement le verrou 405a en rotation dans le sens de rotation qui est référencé par la flèche R sur les figures, et qui coïncide avec le sens de rotation à l'ouverture de la mâchoire 401.

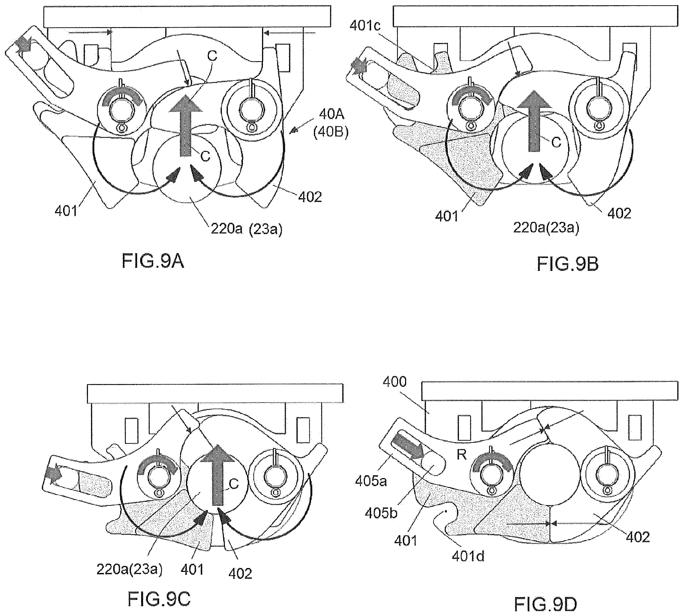

La pige 405b est mobile et guidée en translation par rapport au verrou 405a, entre d'une part une position extrême d'engagement, dans laquelle, en fonction de la position en rotation du verrou 405a par rapport à la mâchoire 401, la pige 405b est positionnée (figure 8A et 9D) dans une gorge de verrouillage 401c de la mâchoire 401 ou (figures 8D et 8E) dans une gorge de déverrouillage 401d de la mâchoire 401, et d'autre part une position extrême de dégagement (Figure 8B, 8C, 8F, 9A, 9B, 9C) dans laquelle elle est totalement dégagée de la gorge de verrouillage 401c et de la gorge de déverrouillage 401d. Cette pige 405b est en outre associée à un ressort de compression permettant d'exercer sur la pige 405b une force de rappel élastique repoussant la pige 405b dans sa position d'engagement.

En référence à la figure 7, le coupleur avant 40A est similaire aux coupleurs arrière 40B et s'en différencie principalement par la mise en œuvre de deux paires de mâchoires 401,402 rotatives qui sont espacées et alignées. Par soucis de simplification, les éléments communs aux coupleurs 40A et 40B ont donc été identifiés sur les figures 6 et 7 par les mêmes références.

La figure 8A représente le coupleur 40A (respectivement 40B) couplé en rotation et verrouillé mécaniquement sur l'axe d'articulation 220a de la tige 220 du vérin 22 (respectivement sur un axe d'articulation 23a du châssis roulant 2).

Les principales étapes mises en œuvre successivement pour déverrouiller manuellement le coupleur 40A (respectivement 40B) et pour désaccoupler le coupleur 40A (respectivement 40B) de l'axe 202a (respectivement 23a) vont à présent être décrites en référence aux figures 8B à 8F.

### Figure 8B :

Un opérateur tire manuellement sur la pige 405b, en comprimant le ressort de compression qui lui est associé, de manière à l'amener dans sa position extrême de dégagement par rapport au verrou 405a, ce qui a pour effet de dégager la pige 405b de la gorge de verrouillage 401c de la mâchoire 401.

### Figure 8C :

L'opérateur fait pivoter manuellement le verrou 405a tout en tirant sur la pige 405b, de telle sorte que ce verrou 405A ne soit plus en butée contre la mâchoire 402.

### Figure 8D :

Le pivotement du verrou 405a est poursuivi jusqu'à ce que la pige 405b soit positionnée au droit de la gorge de déverrouillage 401d de la mâchoire 401, position dans laquelle l'opérateur relâche la pige 405b qui est repoussée élastiquement (flèche P) par le ressort de compression associé et vient sous l'effet de rappel de ce ressort se positionner dans la gorge de déverrouillage 401d de la mâchoire 401. Le verrou 401a est ainsi solidaire en rotation de la mâchoire 401, et les deux mâchoires 401 et 402 ne sont plus verrouillées mécaniquement l'une par rapport à l'autre par le verrou 405a.

L'opérateur peut s'éloigner du coupleur 40A (respectivement 40B), le reste de la séquence étant automatique et ne nécessitant plus de manipulation manuelle du coupleur.

### Figure 8E :

Les mâchoires 401 et 402 étant déverrouillées, l'ouverture des mâchoires s'opère en déplaçant en translation l'axe 220a (respectivement 23a) dans une direction qui coïncide avec la direction de désaccouplement D, laquelle sur la figure 8E est verticale et orientée vers le bas, ou à l'inverse en déplaçant en translation les mâchoires 401, 402 dans une direction opposée qui coïncide avec la direction de couplage C. Sous la poussée exercée par l'axe 220a (respectivement 23a) dans la direction de désaccouplement D, les deux mâchoires 401 et 402 déverrouillées pivotent en s'écartant l'une de l'autre, ce qui permet de dégager l'axe 220a (23a) des mâchoires 401 et 402. En poursuivant suffisamment la translation de l'axe 220a (respectivement 23a) dans la direction de désaccouplement D ou la translation les mâchoires 401, 402 dans une direction qui coïncide avec la direction de couplage C, on désaccouple le coupleur 40A (respectivement 40b) de cet axe.

Pendant la cinématique d'ouverture des mâchoires, sous l'action de la mâchoire 401 et de la pige 405b, le verrou 405a pivote dans le sens de rotation R ; le verrou 405a dépose la pige 405b sur le palier 400, le ressort de compression associé à la pige 405b maintenant dans un premier temps celle-ci sur la mâchoire 401, puis dans un deuxième temps sur le palier 400.

### Figure 8F :

En position d'ouverture des mâchoires 401 et 402, sous l'effet de rappel élastique du ressort de torsion du verrou 405a, le verrou 405a appuie (flèche F) sur les mâchoires 401 et 402, et les deux mâchoires 401 et 402 sont maintenues en butée contre la semelle 404 de la platine 400.

La pression du ressort de torsion du verrou 405a assure un angle d'ouverture optimal des mâchoires 401 et 402 et maintient celles-ci en contact sur la semelle 404.

Les principales étapes mises en œuvre successivement pour coupler automatiquement le coupleur 40A (respectivement 40B) sur l'axe d'articulation 220a (respectivement 23a) vont à présent être décrites en référence aux figures 9A à 9D.

### Figure 9A :

Les mâchoires 401 et 402 étant en position d'ouverture, le couplage en rotation du coupleur 40A (respectivement 40B) avec l'axe d'articulation 220a (respectivement 23a) est opéré en déplaçant en translation l'axe 220a (respectivement 23a) dans la direction de couplage C, qui est opposée à la direction de désaccouplement D susvisée ou en déplaçant en translation les mâchoires 401, 402 dans la direction de désaccouplement D susvisée, de manière à exercer sur les deux mâchoires 401, 402, au moyen de l'axe 220a (23a), une pression orientée dans la direction de couplage C. Dans cet exemple la direction de couplage C est verticale et orientée vers le haut.

Cette pression exercée par l'axe 220a (23a) sur les mâchoires 401, 402 dans la direction de couplage C les fait pivoter en direction de leur position de fermeture. Pendant ce pivotement des mâchoires 401, 402, la mâchoire 402 entraîne en rotation le verrou 40a par rapport à la mâchoire 401, ce qui a pour effet d'entrainer la pige 405b en direction la gorge de verrouillage 401c de la mâchoire 401, le ressort de compression associé à la pige 405b la maintenant sur la mâchoire 401.

### Figures 9B, 9C et 9D :

Le déplacement en translation linéaire de l'axe 220a (respectivement 23a) ou des mâchoires 401, 402 est réalisé jusqu'à ce que les mâchoires 401 et 402 soient rapprochées au contact l'une de l'autre dans leur position de fermeture de la figure 9D.

Dans cette position de fermeture des mâchoires 401, 402, le ressort de compression associé à la pige 405b exerce sur celle-ci une pression de rappel la forçant à se positionner dans la gorge de verrouillage 401c de la mâchoire 401 et le ressort de torsion contraint le verrou 405a en position de butée contre la mâchoire 402. Grâce à la pige 405b positionnée dans la gorge de verrouillage 401c, la mâchoire 401 est verrouillée en rotation dans les deux sens par rapport au verrou 405a. Le verrou 405a bloque en rotation la mâchoire 402 dans le sens de rotation de son ouverture et la mâchoire 402 bloque la mâchoire 401 dans le sens de rotation sa fermeture. L'ensemble est ainsi verrouillé automatiquement et autobloquant.

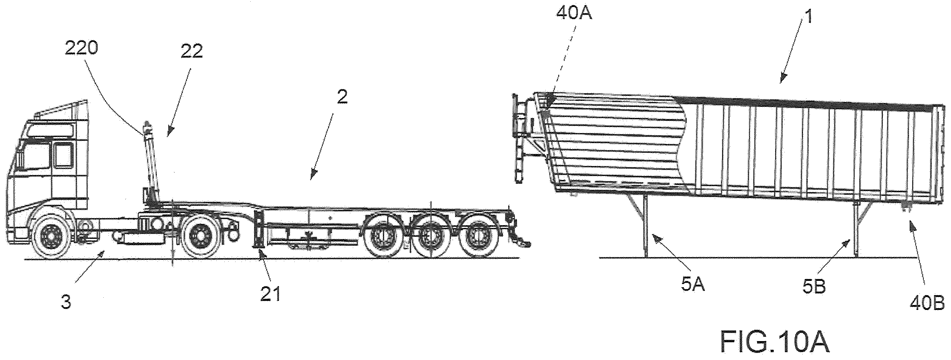

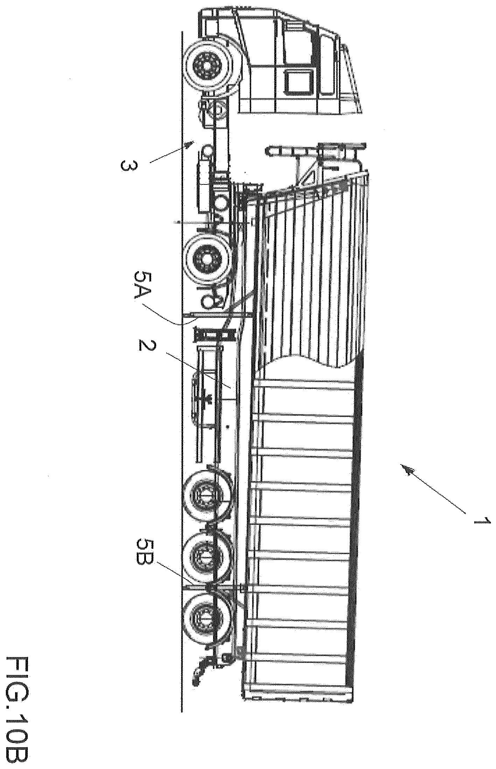

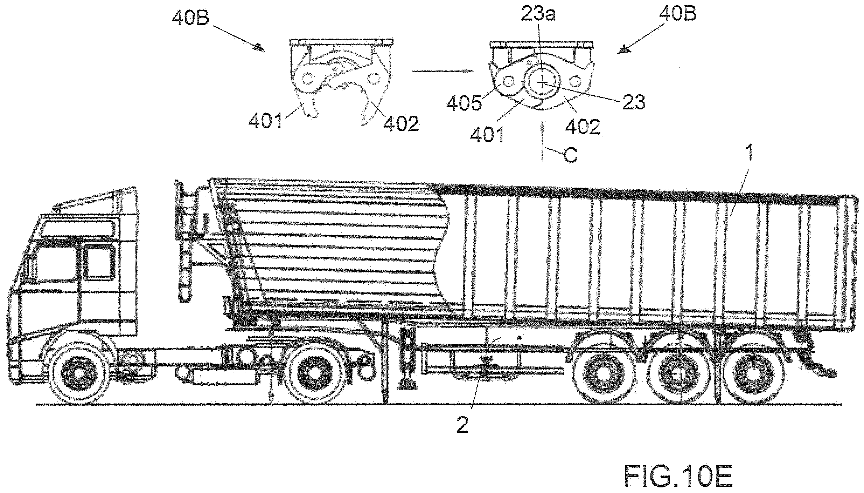

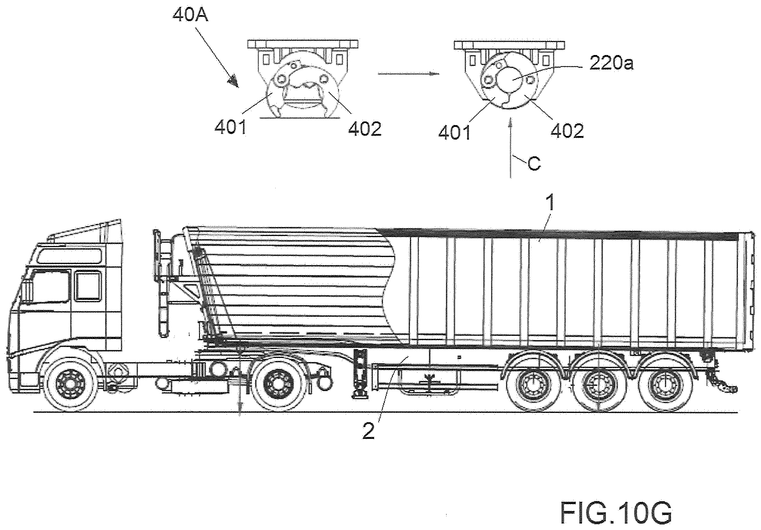

Les principales étapes successives de la séquence de pose et de couplage de la caisse de chargement 1 sur le châssis roulant 2 sont représentées sur les figures 10A à 10G.

### Séquence de pose et de couplage de la caisse de chargement 1 sur le châssis roulant 2 (figures 10A à 10G)

### Figure 10A :

La caisse de chargement 1 vide est posée au sol sur ses béquilles 5A, 5B. Les mâchoires 401, 402 des coupleurs 40A et 40B sont dans leur position ouverte de la figure 8F. Le châssis roulant 2 est attelé au véhicule tracteur 3, les béquilles 21 du châssis roulant 2 étant rétractées. La tige 220 du vérin de bennage 22 est rentrée. L'ensemble châssis 2/véhicule tracteur 3 est positionné devant la caisse de chargement 1, en étant sensiblement aligné et centré par rapport ladite caisse de chargement 1. La suspension de l'ensemble châssis 2/ véhicule tracteur 3 est en position basse.

### Figures 10B, 10C, 10D :

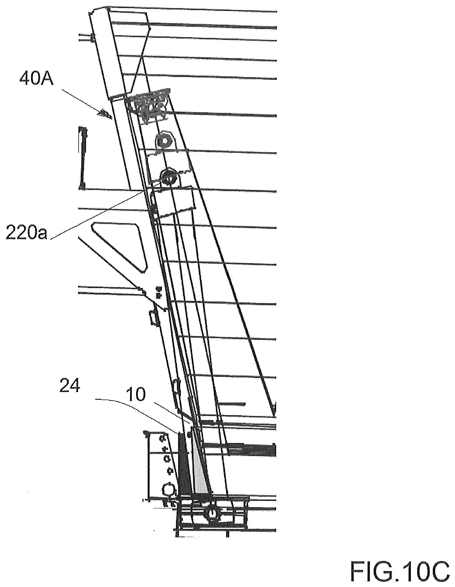

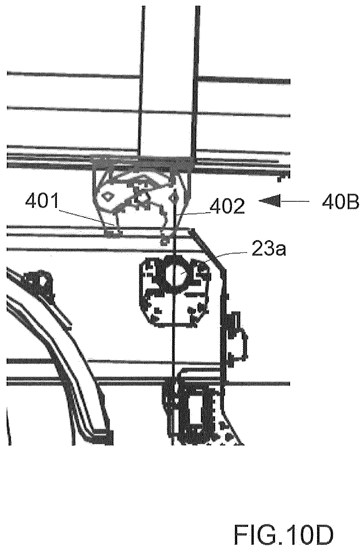

On fait reculer l'ensemble châssis 2/ véhicule tracteur 3 en direction de la caisse de chargement 1, jusqu'à ce que le châssis roulant 2 soit positionné sous la caisse de chargement 1, avec les axes d'articulations 23a du châssis roulant 2 positionnés sensiblement en vis-à-vis des mâchoires ouvertes 401, 402 des coupleurs arrière 40B (FIG.10D) et avec l'axe d'articulation 220a de la tige de vérin positionnée sensiblement en vis-à-vis des mâchoires ouvertes 401, 402 du coupleur avant 40A (FIG.10C).

Plus particulièrement, dans cette variante de réalisation, le positionnement longitudinal du châssis 2 roulant sous la caisse de chargement 1 le long de l'axe longitudinal avant/arrière de la caisse de chargement 1 est contrôlé au moyen des butées avant de centrage longitudinal 24 du châssis roulant 2, et en reculant le châssis roulant 2 jusqu'à ce que ces butée avant de centrage longitudinal 24 viennent tangenter (FIG.10C) la paroi avant 10 de la caisse de chargement 1.

### Figures 10E, 10F :

La suspension du véhicule tracteur 3 est amenée en position haute, ce qui a pour effet de faire monter la partie avant du châssis roulant 2 dans la région du vérin 22 par rapport à la caisse de chargement 1.

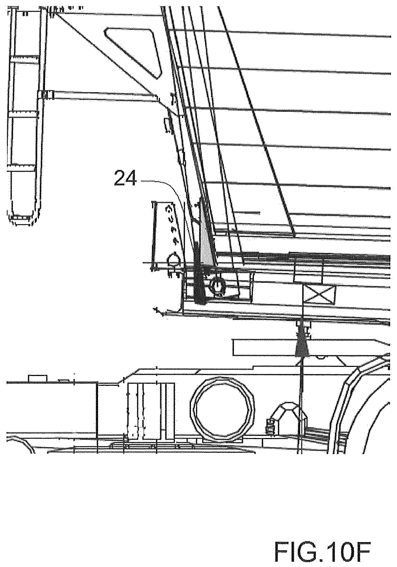

Plus particulièrement, dans cette variante de réalisation, lors de cette montée du châssis roulant 2, les butées avant 24 de centrage longitudinal du châssis roulant 2 (FIG.10F) coopèrent avec la paroi avant 10 de la caisse 1, de manière à obtenir un centrage longitudinal de la partie avant de la caisse de chargement 1 par rapport au châssis roulant 2 ; les butées latérales 11 et 12 de la caisse de chargement 1 coopèrent avec le châssis roulant 2 de manière à obtenir un centrage latéral de la caisse de chargement 1 par rapport au châssis roulant 2.

La suspension du châssis roulant 2 est amenée en position haute, ce qui permet le centrage latéral de la caisse sur le châssis, La montée du châssis roulant 2 provoque également la translation linéaire verticale vers le haut, c'est-à-dire la translation linéaire dans la direction de couplage C, des axes d'articulation 23a du châssis roulant 2. Ces axes d'articulation 23a rentrent en contact avec les mâchoires 401 et 402 des coupleurs arrière 40B, qui se verrouillent automatiquement en position de fermeture sur ces axes d'articulations 23a, tel que cela a été précédemment décrit. La partie arrière de la caisse de chargement est ainsi couplée en rotation avec les axes d'articulation 23a du châssis roulant 2.

### Figure 10G :

On désinstalle les béquilles 5B à l'arrière de la caisse de chargement 1. Ces béquilles arrière sont par exemple retirées de la caisse de chargement. Lorsque les béquilles sont articulées par rapport à la caisse de chargement 1, leur désinstallation peut également être réalisée en les faisant pivoter par rapport à la caisse de manière à les escamoter contre la paroi de fond de la caisse.

On commande la sortie de la tige 220 du vérin 22 de bennage, ce qui a pour effet de provoquer la translation linéaire verticale vers le haut, c'est-à-dire la translation linéaire dans la direction de couplage C, de l'axe d'articulation 220a à l'extrémité de cette tige 220 du vérin de bennage 22. Cet axe d'articulation 220a rentre en contact avec les mâchoires 401 et 402 du coupleur avant 40A, et est guidé par ces mâchoires, qui servent de centreur pour le vérin 22, et qui se verrouillent automatiquement en position de fermeture sur cet axe d'articulation 220a, tel que cela a été précédemment décrit. La tige 220 du vérin de bennage 22 est ainsi couplée en rotation avec la caisse de chargement.

Ensuite, on désinstalle les béquilles 5A à l'avant de la caisse de chargement 1. On commande la descente de la tige 220 du vérin de bennage 22. La caisse 1 repose alors sur le châssis roulant. Puis on commande la suspension de l'ensemble châssis 2/ véhicule tracteur 3 pour l'amener en position nominale intermédiaire de roulage entre les positions haute et basse susvisées.

Les opérations susvisées de pose de la caisse de chargement 1 sur le châssis roulant 2 sont simples, rapides et sans risque pour un opérateur car elles ne nécessitent avantageusement aucune manipulation manuelle pour le couplage du vérin avec la caisse de chargement et pour le couplage de la partie arrière de la caisse de chargement avec le châssis.

A l'issue de ces opérations, le vérin de bennage 22 permet de manière usuelle de lever la partie avant de la caisse de chargement en commandant la sortie de sa tige 220, ce qui a pour effet de manière usuelle de faire basculer en rotation la caisse de chargement 1 par rapport au châssis roulant 2, autour de l'axe de rotation 23. Ce basculement en rotation de la caisse de chargement est utilisé principalement pour décharger par gravité le contenu de la caisse 1, une fois que la ou les portes à l'arrière de la caisse 1 ont été ouvertes. Dans cette variante de réalisation, les axes d'articulation 23a qui définissent cet axe de rotation 23 faisant partie intégrante du châssis roulant 2, ils permettent avantageusement une reprise et une transmission au châssis des efforts de la caisse 1, sans que ces efforts n'agissent sur le verrouillage des coupleurs arrière 40B. Ainsi le poids de la caisse de chargement 1, et le cas échéant de son contenu, notamment lors des opérations de bennage, est transmis directement au châssis roulant 2 et ne risque pas de déverrouiller les coupleurs arrière 40B. Il en est de même pour le coupleur avant 40A, car l'axe d'articulation 220a est porté par le vérin 22.

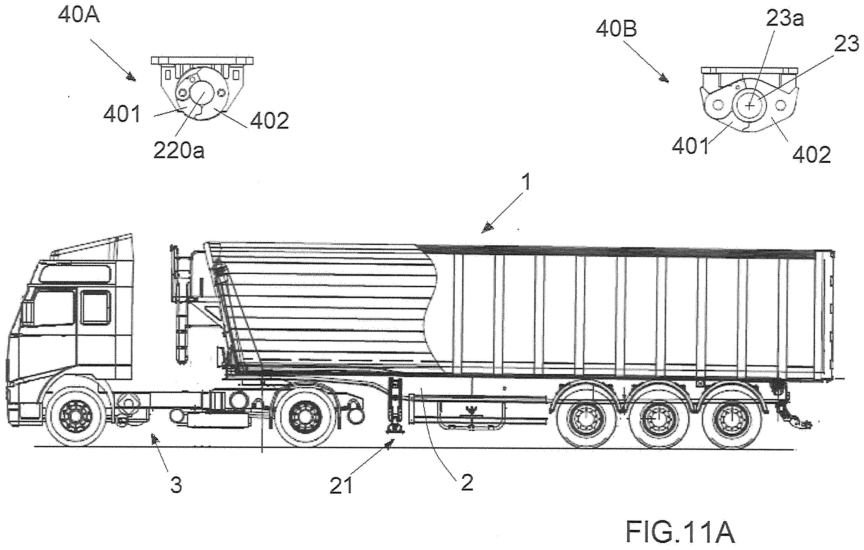

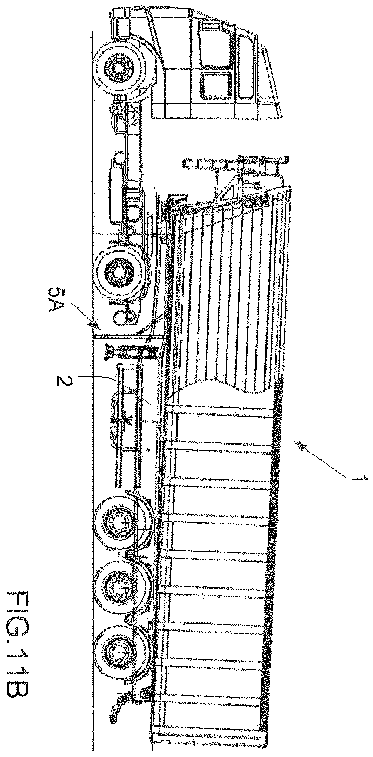

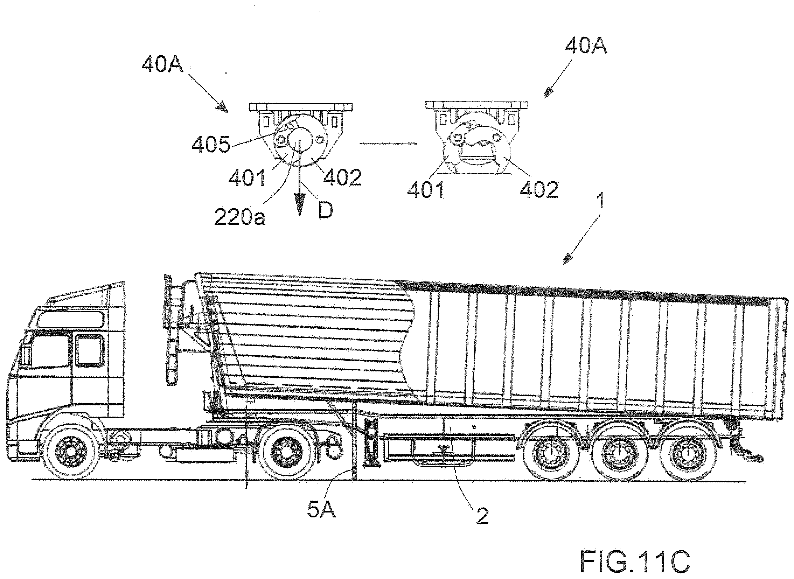

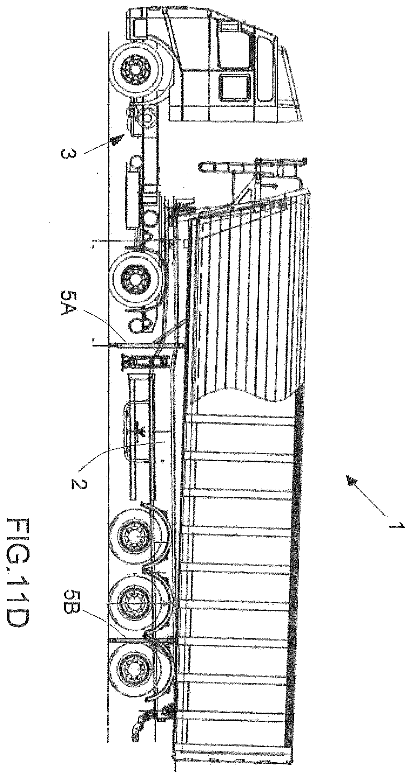

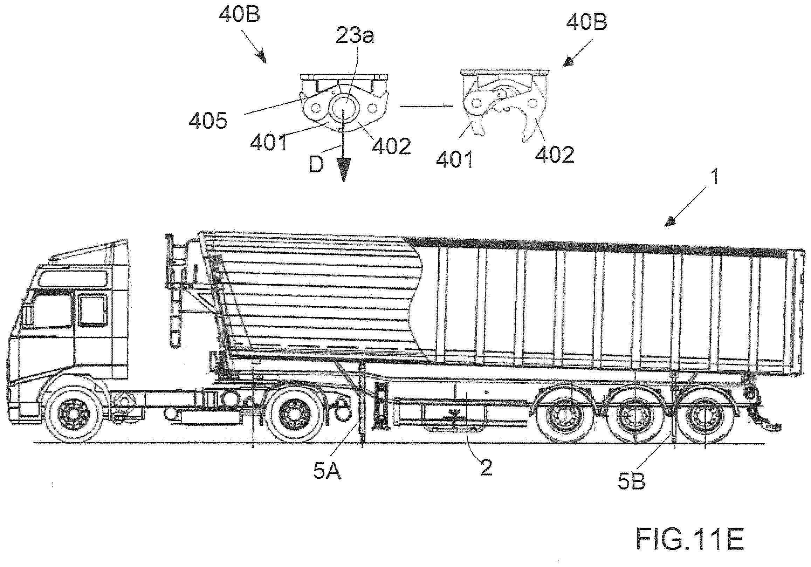

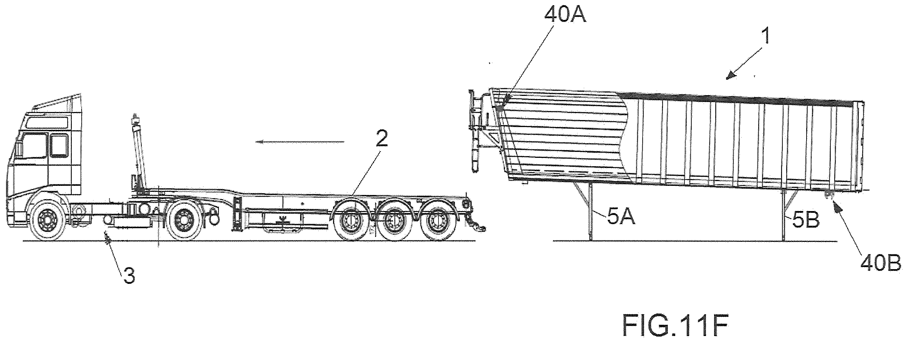

Les principales étapes successives de la dépose au sol de la caisse de chargement 1 portée par le châssis roulant 2 sont représentées sur les figures 11A à 11F.

### Séquence de dépose au solde la caisse de chargement 1 (figures 11A à 11G) Figure 11A :

La caisse de chargement 1 vide étant couplée au châssis roulant 2, lui-même attelé au véhicule tracteur 3, on débranche le cas échéant les connectiques électriques. On commande la suspension du véhicule tracteur 3 pour l'amener en position haute.

### Figure 11B :

On commande le vérin de bennage 22 de manière à sortir la tige 220a du vérin sur une course prédéfinie, par exemple 200mm et on installe les béquilles 5A sous la partie avant de la caisse de chargement 1.

### Figure 11C :

On déverrouille manuellement le verrou 405 du coupleur avant 40A et on commande la suspension du véhicule tracteur 3 pour l'abaisser en position basse, ce qui provoque dans un premier temps l'abaissement du tracteur 3, de la partie avant du châssis roulant 2 dans la région du vérin 22, et de la caisse de chargement 1, jusqu'à ce que la partie avant de la caisse 1 repose sur les béquilles avant 5A., et dans un deuxième temps un abaissement de la partie avant du châssis roulant 1 par rapport à la partie avant de la caisse 1 sur béquilles.

La partie avant de la caisse reposant sur les béquilles 5A, cet abaissement du châssis 2, a pour effet de provoquer la translation linéaire verticale vers le bas, c'est-à-dire la translation linéaire dans la direction de désaccouplement D du coupleur avant 40A, de l'axe d'articulation 220a à l'extrémité de la tige 220 de vérin, et ainsi de désaccoupler la caisse de chargement 1 et la tige 220 du vérin 22 de bennage, tel que cela a été précédemment décrit. Puis on rentre la tige 220 du vérin 22. La caisse 1 est alors posée sur ses béquilles avant 5A.

### Figure 11D :

On commande la suspension du châssis roulant 2 pour l'amener en position haute, ce qui a pour effet de faire monter la partie arrière du châssis roulant 2 dans la région des axes d'articulation 23a, et on installe les béquilles 5B à l'arrière de la caisse de chargement 1.

### Figure 11E :

On déverrouille manuellement le verrou 405 des coupleurs arrière 40B et on commande la suspension du châssis 2 roulant pour l'abaisser en position basse, ce qui provoque dans un premier temps l'abaissement du châssis roulant 2 et de la caisse de chargement 1 jusqu'à ce que la partie arrière de la caisse 1 repose sur les béquilles arrière 5B, et dans un deuxième temps un abaissement du châssis roulant par rapport à la caisse 1 posées sur ses béquilles avant et arrière.

Cet abaissement du châssis 2 a pour effet de provoquer la translation linéaire verticale vers le bas, c'est-à-dire la translation linéaire dans la direction de désaccouplement D, des axes d'articulation 23a du châssis, et ainsi de désaccoupler le châssis 2 et la caisse de chargement 1, tel que cela a été précédemment décrit. La caisse 1 est alors posée sur les béquilles avant 5A et arrière 5B.

De préférence, les béquilles arrière 5B sont plus courtes que les béquilles avant 5A.

### Figure 11F :

On tracte le châssis roulant 2 vers l'avant de manière à le dégager du dessous de la casse 1 posée sur ses béquilles.

Les opérations susvisées de dépose de la caisse de chargement 1 sur des béquilles sont simples, rapides et présentent très peu de risque pour un opérateur, car les seules interventions manuelles de l'opérateur se limitent à la mise en place des béquilles5A, 5B supportant la caisse 1 et au déverrouillage manuel des coupleurs avant 40A et arrière 40B.

En outre, à la différence par exemple des solutions décrites dans les demandes de brevet européen EP 0 925 999 et EP 2 821 280, de manière avantageuse selon l'invention, pendant les opérations susvisées de pose de la caisse de chargement 1 sur le châssis roulant 2 et pendant les opérations susvisées de dépose de la caisse de chargement 1 au sol, l'orientation de la caisse de chargement 1 n'est pas fortement modifiée et la mise en œuvre de l'invention ne nécessite pas d'équiper le châssis roulant d'un équipement de manutention spécial, qui est onéreux et qui augmente le poids mort sur le châssis roulant ; l'invention ne nécessite pas non plus d'équiper la caisse avec un berceau de roulement renforcé et lourd comme dans les demandes de brevet européen EP 0 925 999 et EP 2 821 280. L'invention peut par conséquent avantageusement être mise en œuvre sans pénaliser la charge utile de l'ensemble de chargement (châssis et caisse), les coupleurs avant 40A et arrière 40B étant légers, fiables et peu onéreux.

Pour réaliser les opérations susvisées de pose sur le châssis roulant et de dépose de la caisse sur béquilles, on utilise la suspension existante de l'engin tracteur 3 et la suspension existante du châssis 2. A la différence de la solution décrite dans le brevet américain US 5 040 849, on évite ainsi avantageusement d'équiper le châssis avec des vérins additionnel lourds et onéreux pour réaliser les opérations de montée et d'abaissement du châssis.

De surcroît, les capacités de la suspension existante de l'engin tracteur 3 et de la suspension existante du châssis 2 sont prévues pour une capacité pleine charge de la caisse 1. Par conséquent l'invention n'est pas limitée à la pose ou dépose d'une caisse de chargement 1 vide, mais peut également être appliquée à la pose sur châssis roulant ou dépose sur béquilles d'une caisse de chargement chargée, et notamment d'une caisse pleine. Il suffit de choisir des béquilles 5A, 5B et des fixations de béquilles à la caisse 1 adaptées pour supporter de manière stable le poids de la caisse vide ou chargée.

L'invention n'est pas limitée aux structures particulières de coupleurs avant 40A et arrière 40B à mâchoires 401, 402, qui ont été décrites en référence aux figures, mais s'étend plus généralement à la mise en œuvre de moyens de couplage autoverrouillables, qui comportent des moyens de verrouillage automatique, lesdits moyens de couplage étant aptes à prendre une position de fermeture verrouillée, sous l'effet d'une pression exercée dans une direction de couplage et avec un verrouillage automatique dans leur position de fermeture par les moyens de verrouillage, et les moyens de verrouillage étant en outre déverrouillables, notamment manuellement.

Dans une autre variante de réalisation, l'axe d'articulation horizontal 220a pourrait être fixé à la caisse de chargement 1 en étant orienté perpendiculairement à l'axe longitudinal avant/arrière de la caisse 1, et les premiers moyens de couplage 4 (coupleur avant 40A) pourraient être fixés à la tige de vérin (et non plus sur la caisse de chargement 1).

Dans une autre variante de réalisation, le ou les axes d'articulation 23a pourraient être fixés à la caisse de chargement 1, en étant orientés perpendiculairement à l'axe longitudinal avant/arrière de la caisse 1, et les deuxièmes moyens de couplage 4' (coupleurs arrière 40B), pourrait être fixés au châssis roulant 2 (et non plus à la caisse de chargement 1).

Dans une autre variante de réalisation, on peut remplacer les deuxièmes moyens de couplage 4' par des moyens de couplage non automatiques, qui permettent d'une manière plus générale de coupler en rotation autour dudit axe de rotation 23, et de manière amovible, la caisse de chargement 1 au châssis roulant 2.Dans ce cas, seuls les premiers moyens de couplage 4 sont automatiques et autoverrouillables.

A l'inverse, dans une autre variante de réalisation, on peut remplacer les premiers moyens de couplage 4 par des moyens de couplage non automatiques, qui permettent d'une manière plus générale de coupler en rotation, et de manière amovible, la tige 220 du vérin à la caisse de chargement 1. Dans ce cas, seuls les deuxièmes moyens de couplage 4' sont automatiques et autoverrouillables.

## Revendications

1. Ensemble de chargement comportant un châssis roulant (2) et une caisse de chargement (1), qui est apte à être montée de manière amovible sur le châssis roulant en étant articulée en rotation par rapport au châssis roulant (2) autour d'un axe de rotation horizontal (23), ledit châssis roulant (2) est équipé d'au moins un vérin (22), qui comporte une tige mobile (220), et qui permet, lorsque la caisse de chargement (1) est montée sur le châssis (2) et est couplée à la tige mobile (220) du vérin, de faire pivoter la caisse de chargement (1) par rapport au châssis autour dudit axe de rotation horizontal (23), **caractérisé en ce que** ledit ensemble comporte en outre au moins l'une des caractéristiques techniques (a) ou (b) suivantes:
(a) ledit ensemble comprend des premiers moyens de couplage (4) autoverrouillables, qui comportent des premiers moyens de verrouillage automatique (405), lesdits premiers moyens de couplage (4) étant aptes à prendre une position de fermeture verrouillée, sous l'effet d'une pression exercée dans une direction de couplage (C) et avec un verrouillage automatique dans leur position de fermeture par les premiers moyens de verrouillage (405), les premiers moyens de couplage (4) étant fixés à la caisse de chargement (1) ou étant fixés à la tige (220) du vérin (22), de telle sorte que la tige (220) du vérin est apte à être déplacée, et de préférence à être sortie, de manière à exercer, sur les premiers moyens de couplage (4), une pression dans la direction de couplage (C) les amenant automatiquement dans leur position de fermeture verrouillée, dans laquelle ils couplent en rotation la tige (220) du vérin (22) à la caisse de chargement (1), les premiers moyens de couplage (4) étant en outre déverrouillables, de manière à pouvoir désaccoupler la tige (220) du vérin et la caisse de chargement (1) en déplaçant la tige (220) du vérin par rapport à la caisse de chargement (1), et ledit ensemble comprend des deuxièmes moyens de couplage (4') qui permettent de coupler en rotation autour dudit axe de rotation horizontal (23), et de manière amovible, la caisse de chargement (1) au châssis roulant (2),
ou
(b) ledit ensemble comprend des premiers moyens de couplage (4) qui permettent de coupler en rotation et de manière amovible la tige (220) du vérin à la caisse de chargement (1), et des deuxièmes moyens de couplage (4') autoverrouillables, qui comportent des deuxièmes moyens de verrouillage (405), lesdits deuxièmes moyens de couplage (4') étant aptes à prendre une position de fermeture verrouillée, sous l'effet d'une pression exercée dans une direction de couplage (C) et avec un verrouillage automatique dans leur position de fermeture par les deuxièmes moyens de verrouillage (405), les deuxièmes moyens de couplage (4') étant fixés à la caisse de chargement ou étant fixés au châssis roulant (2) de telle sorte que le châssis roulant (2) est apte à être déplacé de manière à exercer sur les deuxièmes moyens de couplage (4') une pression dans la direction de couplage (C) les amenant automatiquement dans leur position de fermeture verrouillée, dans laquelle ils couplent en rotation autour dudit axe de rotation horizontal (23) la caisse de chargement (1) au châssis roulant (2), les deuxièmes moyens de couplage (4') étant en outre déverrouillables, de manière à pouvoir désaccoupler le châssis roulant (2) et la caisse de chargement (1) en déplaçant le châssis roulant par rapport à la caisse de chargement (1).

2. Ensemble de chargement selon la revendication 1, dans lequel les deuxièmes moyens de couplage (4') sont fixés à la caisse de chargement (1) ou sont fixés au châssis roulant (2), de telle sorte que ladite pression dans la direction de couplage (C) peut être exercée sur les deuxièmes moyens de couplage (4') en déplaçant en hauteur le châssis roulant (2) et le désaccouplement du châssis roulant (2) et de la caisse de chargement (1) peut être obtenu, une fois les deuxièmes moyens de couplage (4') déverrouillés, en abaissant le châssis roulant.

3. Ensemble de chargement selon l'une quelconque des revendications 1 ou 2, comportant au moins la caractéristique technique (a), dans lequel les premiers moyens de couplage (4) sont fixés à la caisse de chargement (1), et de préférence dans lequel la tige (220) du vérin (22) comporte un axe d'articulation (220a) et les premiers moyens de couplage (4) comportent au moins une paire de mâchoires (401 ; 402), qui sont fixées à la caisse de chargement (1), qui sont articulées en rotation entre une position d'ouverture et une position de fermeture autour de l'axe d'articulation de la tige (220) du vérin, et qui sont aptes à pivoter automatiquement de leur position d'ouverture à leur position de fermeture sous l'effet d'une pression orientée dans la direction de couplage (C) et exercée au moyen de l'axe d'articulation de la tige (220) du vérin (22), lesdits premiers moyens de verrouillage (405) permettant de verrouiller automatiquement les mâchoires (401 ; 402) en position de fermeture autour de l'axe d'articulation (220a) de la tige (220) du vérin.

4. Ensemble de chargement selon l'une quelconque des revendications 1 ou 2, comportant au moins la caractéristique technique (a), dans lequel les premiers moyens de couplage (4) sont fixés à la tige (220) du vérin (22), et de préférence dans lequel la caisse de chargement (1) comporte un axe d'articulation et les premiers moyens de couplage (4) comportent au moins une paire de mâchoires (401 ; 402), qui sont fixées à la tige (220) du vérin (22), qui sont articulées en rotation entre une position d'ouverture et une position de fermeture autour de l'axe d'articulation de la caisse de chargement, et qui sont aptes à pivoter automatiquement de leur position d'ouverture à leur position de fermeture sous l'effet d'une pression orientée dans la direction de couplage (C) et exercée au moyen de l'axe d'articulation de la caisse de chargement (1), lesdits premiers moyens de verrouillage (405) permettant de verrouiller automatiquement les deux mâchoires en position de fermeture autour dudit axe d'articulation.

5. Ensemble de chargement selon l'une quelconque des revendications précédentes, qui comporte au moins la caractéristique technique (b), dans lequel les deuxièmes moyens de couplage (4') sont fixés à la caisse de chargement (1), et de préférence dans lequel le châssis roulant (2) comporte au moins un axe d'articulation (23a) définissant ledit axe de rotation horizontal (23) de la caisse de chargement (1) par rapport au châssis roulant (2), et dans lequel les deuxièmes moyens de couplage (4') comportent au moins une paire de mâchoires (401 ; 402), qui sont fixées à la caisse de chargement (1), qui sont articulées en rotation entre une position d'ouverture et une position de fermeture autour de l'axe d'articulation (23a) du châssis roulant (2), et qui sont aptes à pivoter automatiquement de leur position d'ouverture à leur position de fermeture sous l'effet d'une pression orientée dans la direction de couplage (C) et exercée au moyen de l'axe d'articulation (23a) du châssis roulant (2), lesdits premiers moyens de verrouillage (405) permettant de verrouiller automatiquement les deux mâchoires en position de fermeture autour de l'axe d'articulation (23a) du châssis roulant (2).

6. Ensemble de chargement selon l'une quelconque des revendications 1 à 4, qui comporte au moins la caractéristique technique (b), dans lequel les deuxièmes moyens de couplage (4') sont fixés au châssis roulant (2), et de préférence dans lequel la caisse de chargement (2) comporte au moins un axe d'articulation (23a) définissant ledit axe de rotation horizontal (23) de la caisse de chargement (1) par rapport au châssis roulant (2), et dans lequel les deuxièmes moyens de couplage (4') comportent au moins une paire de mâchoires (401 ; 402), qui sont fixées au châssis roulant (2), qui sont articulées en rotation entre une position d'ouverture et une position de fermeture autour de l'axe d'articulation (23a) de la caisse de chargement (1), et qui sont aptes à pivoter automatiquement de leur position d'ouverture à leur position de fermeture sous l'effet d'une pression orientée dans la direction de couplage (C) et exercée au moyen de l'axe d'articulation (23a) de la caisse de chargement (1), lesdits premiers moyens de verrouillage (405) permettant de verrouiller automatiquement les deux mâchoires en position de fermeture autour de l'axe d'articulation (23a) du châssis roulant (2).

7. Ensemble de chargement selon l'une quelconque des revendications 5 ou 6, dans lequel les deuxièmes moyens de couplage (4') comportent au moins deux paires de mâchoires (401 ; 402), qui sont espacées et alignées.

8. Ensemble de chargement selon l'une quelconque des revendications 3, 4, 5, ou 6, dans lequel les mâchoires (401 ; 402) sont maintenues élastiquement en position d'ouverture lorsqu'elles ne sont plus verrouillées en position de fermeture.

9. Ensemble de chargement selon l'une quelconque des revendications 3, 4, 5 ou 6, dans lequel les premiers moyens de verrouillage (405) et/ou les deuxièmes moyens de verrouillage (405) comportent un verrou pivotant (405a), qui est apte à être entraîné en rotation jusqu'à une position de verrouillage par une première mâchoire (402) lorsque les mâchoires (401 ; 402) pivotent de leur position d'ouverture à leur position de fermeture, et qui permet dans cette position de verrouillage un blocage en rotation des deux mâchoires (401 ; 402) en position de fermeture, et dans lequel le verrou (405a) peut être actionné en rotation, notamment manuellement, jusque dans une position de déverrouillage dans laquelle les deux mâchoires (401 ; 402) ne sont pas bloquées en rotation.

10. Ensemble selon la revendication 9, dans lequel la deuxième mâchoire (401) comporte une gorge de verrouillage (401c), dans lequel le verrou (405a) pivotant embarque une pige (405b), qui est coulissante et rappelée élastiquement en position d'engagement par un moyen de rappel élastique, de type ressort de compression, dans lequel le verrou pivotant (405a) en combinaison avec le moyen de rappel élastique de la pige (405b) est apte, au cours de sa rotation vers sa position de verrouillage, à entraîner la pige (405b) jusque dans la gorge de verrouillage (401c) lorsque les mâchoires (401 ; 402) pivotent de leur position d'ouverture à leur position de fermeture, dans lequel la pige (405b), une fois positionnée dans la gorge de verrouillage (401c), permet de solidariser en rotation le verrou (405) et la deuxième mâchoire (401), et dans lequel lorsque les mâchoires (401, 402) sont verrouillées, la pige (405b) peut être actionnée, notamment manuellement, de manière à coulisser en dehors de ladite gorge de verrouillage (401c) et le verrou (405) peut être pivoté par rapport à la deuxième mâchoire (401) de manière à déverrouiller en rotation les mâchoires (401 ; 402).

11. Ensemble selon la revendication 10, dans lequel la deuxième mâchoire (401) comporte également une gorge de déverrouillage (401d), dans lequel le verrou pivotant (405a) en combinaison avec le moyen de rappel élastique de la pige (405b) est apte, au cours de sa rotation forcée permettant de déverrouiller les mâchoires (401 ; 402), à entraîner la pige (405b) jusque dans la gorge de déverrouillage (401d), et dans lequel la pige (405b), une fois positionnée dans la gorge de déverrouillage (401d), permet de solidariser en rotation le verrou (405) et la deuxième mâchoire (401), les deux mâchoires (401 ; 402) étant déverrouillées en rotation.

12. Ensemble selon l'une quelconque revendication 10 ou 11, dans lequel le verrou (40a) est équipé d'un moyen de rappel élastique, de type ressort de torsion, qui permet de faire pivoter le verrou (405a) en appui sur les deux mâchoires (401 ; 402) pour les maintenir en butée en position d'ouverture.

13. Ensemble selon l'une quelconque revendication 10 à 12, dans lequel, une fois les deux mâchoires (401, 402) verrouillées en position de fermeture, avec la pige (405b) positionnée dans la gorge de verrouillage (401c) de la deuxième mâchoire (401), la deuxième mâchoire (401) est verrouillée en rotation dans les deux sens par rapport au verrou (405a), le verrou (405a) bloque en rotation la première mâchoire (402) dans le sens de rotation de son ouverture et la première mâchoire (402) bloque en rotation la deuxième mâchoire (401) dans le sens de rotation de sa fermeture.

14. Ensemble de chargement selon l'une quelconque des revendications précédentes, comportant des béquilles (5A; 5B) permettant de supporter au sol la caisse de chargement (1), en la surélevant d'une hauteur suffisante pour permettre un positionnement du châssis roulant (2) sous la caisse de chargement (1) supportée par lesdites béquilles, et/ou dans lequel la caisse de chargement (1) et le châssis roulant (2) comportent des moyens de centrage (11, 12 ; 24), qui permettent un centrage longitudinal et un centrage latéral de la caisse de chargement (1) sur le châssis roulant (2).

15. Ensemble de chargement selon l'une quelconque des revendications précédentes et comportant les deux caractéristiques techniques (a) et (b).

16. Procédé de pose et de couplage d'une caisse de chargement (1), sur un châssis roulant (2), mis en oeuvre au moyen d'un ensemble de chargement visé à la revendication 15, la caisse de chargement (1) étant posée sur des béquilles (5A ; 5B), ledit procédé comportant les étapes successives suivantes :
- on positionne le châssis roulant (2) sous la caisse de chargement (1), ledit châssis roulant (2) étant en position basse ;
- on fait monter le châssis roulant (2) en position haute, de manière à mettre en contact le châssis roulant (2) avec les deuxièmes moyens de couplage (4') fixés à la caisse de chargement (1) ou à mettre en contact avec la caisse de chargement (1) les deuxièmes moyens de couplage (4') fixés au châssis roulant (2), lesquels deuxièmes moyens de couplage (4') se verrouillent automatiquement en position de fermeture, de telle sorte que la caisse de chargement (1) est couplée en rotation au châssis roulant (2) autour dudit axe de rotation horizontal (23) ;
- on désinstalle les béquilles (5B) supportant la partie de la caisse de chargement (1) à proximité du ou des axes d'articulation (23a) ;
- on couple automatiquement la tige (220) du vérin (22) à la caisse de chargement (1), au moyen des premiers moyens de couplage (4), en commandant la sortie de la tige (220) du vérin (22) ;
- on désinstalle les béquilles (5A) supportant la partie de la caisse de chargement (1) à proximité du vérin (22), et on commande la descente de la tige (220) du vérin, la caisse de chargement (1) reposant sur le châssis roulant (2) ;
- on fait descendre le châssis roulant (2) en position nominale intermédiaire de roulage entre les positions haute et basse.

17. Procédé de désaccouplement et de dépose sur des béquilles (5A ; 5B) d'une caisse de chargement (1) posée sur un châssis roulant (2), ledit procédé étant mis en œuvre au moyen d'un ensemble de chargement visé à la revendication 15, ladite caisse de chargement (1) étant couplée en rotation à la tige (220) du vérin (22) au moyen des premiers moyens de couplage (4) verrouillés dans leur position de fermeture, et ladite caisse de chargement (1) étant couplée au châssis roulant (2) au moyen des deuxièmes moyens de couplage (4') verrouillés dans leur position de fermeture, ledit procédé comportant les étapes successives suivantes :
- on fait monter la partie du châssis roulant (2) dans la région du vérin (22) pour l'amener en position haute ;
- on installe des premières béquilles (5A) sous la caisse de chargement (1) à proximité du vérin (22) ;
- on déverrouille les premiers moyens de couplage (4) ;
- on fait descendre ladite partie du châssis roulant (2) dans la région du vérin (22) pour l'amener en position basse de manière à désaccoupler la tige (220) du vérin (22) de la caisse de chargement (1), et jusqu'à ce que la caisse de chargement (1) repose au sol sur les premières béquilles (5A) ;
- on fait monter la partie du châssis roulant (2) dans la région du ou des axes d'articulation (23a) pour l'amener en position haute ;
- on installe des deuxièmes béquilles (5B) sous la caisse de chargement (1) à proximité du ou des axes d'articulation (23a) ;
- on déverrouille les deuxièmes moyens de couplage (4') ;
- on fait descendre ladite partie du châssis roulant (2) dans la région du ou des axes d'articulation (23a) pour l'amener en position basse, de manière désaccoupler la caisse de chargement (1) du châssis roulant (2), et jusqu'à ce que la caisse de chargement (1) repose au sol sur les premières (5A) et deuxièmes (5B) béquilles,
- on déplace le châssis roulant (2), de manière à le dégager du dessous de la caisse de chargement (1) posée sur les premières et deuxièmes béquilles.

## Patentansprüche

1. Beladungsanordnung mit einem Fahrgestell (2) und einer Lademulde (1), die abnehmbar am Fahrgestell montiert werden kann, wobei sie in Bezug auf das fahrbare Fahrgestell (2) um eine horizontale Drehachse (23) schwenkbar angelenkt ist, wobei das Fahrgestell (2) mit mindestens einem Zylinder (22) ausgestattet ist, der eine bewegliche Stange (220) umfasst, und der es ermöglicht, die Lademulde (1) relativ zum Rahmen um die horizontale Drehachse (23) zu schwenken wenn die Lademulde (1) auf dem Fahrgestell (2) montiert und mit der beweglichen Stange (220) des Zylinders gekoppelt ist,
**dadurch gekennzeichnet, dass** die Anordnung ferner mindestens eine der folgenden technischen Eigenschaften (a) oder (b) hat:
(a) die Anordnung umfasst erste selbstverriegelnde Kupplungsmittel (4), die erste automatische Verriegelungsmittel (405) umfassen, wobei die ersten Kupplungsmittel (4) in der Lage sind, unter der Wirkung von Druck, der in einer Kupplungsrichtung (C) ausgeübt wird, eine verriegelte Schließstellung einzunehmen, und durch die ersten Verriegelungsmittel (405) automatisch in der geschlossenen Position verriegelt zu sein, wobei die ersten Kupplungsmittel (4) an der Lademulde (1) oder an der Stange (220) des Zylinders (22) befestigt sind, so dass die Stange (220) des Zylinders beweglich und vorzugsweise derart ausfahrbar ist, dass sie einen Druck in Kupplungsrichtung (C), auf die ersten Kupplungsmittel (4) ausübt, der sie automatisch in ihre verriegelte Schließstellung bringt, in der sie die Stange (220) des Zylinders (22) schwenkbar mit der Lademulde (1) verbinden, wobei das erste Kupplungsmittel (4) ferner entriegelbar ist, um die Stange (220) des Zylinders und die Lademulde (1) durch Bewegen der Stange (220) des Zylinders in Bezug auf die Lademulde (1) abkoppeln zu können, und wobei die Anordnung zweite Kupplungsmittel (4') umfasst, die es ermöglichen, die Lademulde (1) um die horizontale Drehachse (23) schwenkbar und abnehmbar mit dem Fahrgestell (2) zu verbinden,
oder
(b) die Anordnung erste Kupplungsmittel (4) umfasst, die es ermöglichen, die Stange (220) des Zylinders schwenkbar und abnehmbar mit der Lademulde (1) zu koppeln, und zweite selbsthemmende Kupplungsmittel (4'), die zweite Verriegelungsmittel (405) umfassen, wobei die zweiten Kupplungsmittel (4') eine Schließstellung haben und in der Lage sind, unter der Wirkung von Druck durch die zweiten Verriegelungsmittel (405), der in einer Kupplungsrichtung (C) ausgeübt wird, automatisch in ihrer Schließstellung verriegelt zu werden, wobei die zweiten Kupplungsmittel (4') derart an der Lademulde oder am Fahrgestell (2) befestigt sind, dass das Fahrgestell (2) beweglich ist, um Druck in Kupplungsrichtung (C) auf die zweiten Kupplungsmittel (4') auszuüben, um sie automatisch in ihre verriegelte Schließstellung bringen, wobei die Lademulde (1) und das Fahrgestell (2) in Schwenkrichtung um die horizontale Drehachse (23) verbunden sind, und wobei die zweite Kupplungseinrichtung (4') ferner entriegelbar ist, so dass das Fahrgestell (2) und die Lademulde (1) durch Bewegen des Fahrgestells relativ zur Lademulde (1) entkoppelt werden können.

2. Beladungsanordnung nach Anspruch 1, wobei die zweiten Kupplungsmittel (4') an der Lademulde (1) oder am Fahrgestell (2) befestigt sind, so dass der Druck in Kupplungsrichtung (C) auf die zweiten Kupplungsmittel (4') durch Auf- und Abbewegen des Fahrgestells (2) ausgeübt werden kann und die Entkopplung des Fahrgestells (2) und der Lademulde (1) nach dem Entriegeln der zweiten Kupplungsmittel (4') durch Absenken des Fahrgestells möglich ist.

3. Beladungsanordnung nach einem der Ansprüche 1 oder 2, umfassend mindestens die technische Eigenschaft (a), wobei die ersten Kupplungsmittel (4) an der Lademulde (1) befestigt sind, und wobei vorzugsweise die Stange (220) des Zylinders (22) eine Gelenkachse (220a) umfasst und die ersten Kupplungsmittel (4) mindestens ein Paar Backen (401; 402) umfassen, die an der Lademulde (1) befestigt sind, die zwischen einer geöffneten- und einer geschlossenen Position um die Gelenkachse der Stange (220) des Zylinders schwenkbar angelenkt sind, und die unter der Einwirkung von in Kupplungsrichtung (C) gerichtetem Druck, der über die Gelenkachse der Stange (220) des Zylinders (22) ausgeübt wird, automatisch aus ihrer geöffneten Position in ihre geschlossene Position schwenken können, wobei die ersten Verriegelungsmittel (405) die Backen (401; 402) automatisch bezogen auf die Gelenkachse (220a) der Zylinderstange (220) in der geschlossenen Position verriegeln.

4. Beladungsanordnung nach einem der Ansprüche 1 oder 2, umfassend mindestens die technische Eigenschaft (a), wobei die ersten Kupplungsmittel (4) an der Stange (220) des Zylinders (22) befestigt sind, und wobei vorzugsweise die Lademulde (1) eine Gelenkachse umfasst und die ersten Kupplungsmittel (4) mindestens ein Paar Backen (401; 402) umfassen, die an der Stange (220) des Zylinders (22) befestigt sind, die zwischen einer geöffneten und einer geschlossenen Position um die Gelenkachse der Lademulde schwenkbar angelenkt sind, und die unter der Wirkung von in Kupplungsrichtung (C) gerichtetem Druck, der über die Gelenkachse der Lademulde (1) ausgeübt wird, automatisch aus ihrer geöffneten Position in ihre geschlossene Position schwenken können, wobei die ersten Verriegelungsmittel (405) die beiden Backen automatisch bezogen auf die Gelenkachse in der geschlossenen Position verriegeln.

5. Beladungsanordnung nach einem der vorstehenden Ansprüche, die mindestens die technische Eigenschaft (b) hat, wobei die zweiten Kupplungsmittel (4') an der Lademulde (1) befestigt sind, und wobei vorzugsweise das Fahrgestell (2) mindestens eine Gelenkachse (23a) umfasst, die die horizontale Drehachse (23) der Lademulde a(1) in Bezug auf das Fahrgestell (2) definiert, und wobei die zweiten Kupplungsmittel (4') mindestens ein Paar Backen (401; 402) umfassen, die an der Lademulde (1) befestigt sind, die zwischen einer Öffnungs- und einer Schließposition um die Gelenkachse (23a) des Fahrgestell (2) schwenkbar angelenkt sind, und die unter der Einwirkung von in Kupplungsrichtung (C) gerichtetem und mittels der Gelenkachse (23a) des Fahrgestells (2) ausgeübtem Druck automatisch aus ihrer geöffneten Position in ihre geschlossene Position schwenken können, wobei die ersten Verriegelungsmittel (405) automatisch die beiden Backen in der geschlossenen Position bezogen die Gelenkachse (23a) des Fahrgestells (2) verriegeln.

6. Beladungsanordnung nach einem der Ansprüche 1 bis 4, die mindestens die technische Eigenschaft (b) hat, wobei die zweiten Kupplungsmittel (4') am Fahrgestell (2) befestigt sind, und wobei vorzugsweise die Lademulde (2) mindestens eine Gelenkachse (23a) umfasst, die die horizontale Drehachse (23) der Lademulde (1) in Bezug auf das Fahrgestell (2) definiert, und bei der die zweiten Kupplungsmittel (4') mindestens ein Paar Backen (401; 402) umfassen, die am Fahrgestell (2) befestigt sind, die zwischen einer Öffnungs- und einer Schließposition um die Gelenkachse (23a) der Lademulde (1) schwenkbar angelenkt sind, und die unter der Einwirkung von in Kupplungsrichtung (C) gerichtetem und mittels der Gelenkachse (23a) der Lademulde (1) ausgeübtem Druck automatisch aus ihrer geöffneten Position in ihre geschlossene Position schwenkbar sind, wobei die ersten Verriegelungsmittel (405) die beiden Backen automatisch in der geschlossenen Position bezogen auf die Gelenkachse (23a) des Fahrgestells (2) verriegeln.

7. Beladungsanordnung nach einem der Ansprüche 5 oder 6, wobei die zweite Kupplungseinrichtung (4') mindestens zwei Backenpaare (401; 402) umfasst, die beabstandet und zueinander ausgerichtet sind.

8. Beladungsanordnung nach einem der Ansprüche 3, 4, 5 oder 6, wobei die Backen (401; 402) elastisch in der geöffneten Position gehalten werden, wenn sie nicht mehr in der geschlossenen Position verriegelt sind.

9. Beladungsanordnung nach einem der Ansprüche 3, 4, 5 oder 6, wobei die ersten Verriegelungsmittel (405) und/oder die zweiten Verriegelungsmittel (405) ein schwenkbares Schloss (405a) umfassen, das durch eine erste Backe (402) in eine Verriegelungsposition gedreht werden kann, wenn die Backen (401; 402) aus ihrer geöffneten Position in ihre geschlossene Position schwenken, und das in dieser Verriegelungsposition eine Drehverriegelung der beiden Backen (401; 402) in der geschlossenen Position ermöglicht, und in der die Verriegelung (405a) durch Drehen bis in eine Entriegelungsposition, wobei die beiden Backen (401; 402) nicht in Schwenkrichtung verriegelt sind, insbesondere manuell, betätigbar ist.

10. Beladungsanordnung nach Anspruch 9, wobei die zweite Backe (401) eine Verriegelungsnut (401c) aufweist, wobei die schwenkbare Verriegelung (405a) einen Bolzen (405b) trägt, der gleitend und elastisch durch elastische Rückstellmittel des Druckfedertyps in die Eingriffsposition zurückgeführt wird, wobei der Schwenkbolzen (405a) in Kombination mit dem elastischen Rückstellmittel der Stange (405b) in der Lage ist, während seiner Drehung in Richtung ihrer Verriegelungsposition die Stange (405b) in die Verriegelungsnut (401c) einzuschieben, wenn die Backen (401; 402) aus ihrer geöffneten Position in ihre geschlossene Position schwenken, wobei der Bolzen (405b), der einmal in der Verriegelungsnut (401c) positioniert ist, dazu ausgelegt ist, die Verriegelung (405) und die zweite Backe (401) schwenkbar zu verbinden, und wobei, wenn die Backen (401, 402) verriegelt sind, der Bolzen (405b) insbesondere manuell betätigt werden kann, um aus der Verriegelungsnut (401c) zu gleiten, und das Schloss (405) in Bezug auf die zweite Backe (401) geschwenkt werden kann, um die Backen (401; 402) zu entriegeln.

11. Beladungsanordnung nach Anspruch 10, wobei die zweite Backe (401) auch eine Entriegelungsnut (401d) aufweist, wobei die schwenkbare Verriegelung (405a) in Kombination mit dem elastischen Rückstellmittel der Stange (405b) während ihrer Zwangsdrehung zum Entriegeln der Backen (401; 402) dazu ausgelegt ist, den Bolzen (405b) in die Entriegelungsnut (401d) einzuschieben, und wobei der Bolzen (405b), sobald er in der Entriegelungsnut (401d) positioniert ist, die Verriegelung (405) und die zweite Backe (401) in Schwenkrichtung verbindet, wobei beide Backen (401; 402) Schwenkrichtung entriegelt werden.

12. Beladungsanordnung nach einem der Ansprüche 10 oder 11, wobei die Verriegelung (40a) mit einem elastischen Rückstellmittel vom Torsionsfedertyp ausgestattet ist, das es ermöglicht, dass die Verriegelung (405a) gedreht werden kann, um auf beiden Backen (401; 402) zu ruhen und sie in der geöffneten Position zu halten.

13. Beladungsanordnung nach einem der Ansprüche 10 bis 12, wobei, sobald beide Backen (401, 402) in der geschlossenen Position verriegelt sind, der Bolzen (405b) in der Verriegelungsnut (401c) der zweiten Backe (401) positioniert ist, die zweite Backe (401) in beide Richtungen in Bezug auf die Verriegelung (405a) drehfest ist, die Verriegelung (405a) die erste Backe (402) in Drehrichtung ihrer Öffnung verriegelt und die erste Backe (402) die zweite Backe (401) in Drehrichtung ihrer Schließung verriegelt.

14. Beladungsanordnung nach einem der vorstehenden Ansprüche, umfassend Stützen (5A; 5B), die es ermöglichen, die Lademulde (1) auf dem Boden zu stützen, indem sie um eine Höhe angehoben wird, die ausreicht, um das Fahrgestell (2) unter der Lademulde (1) zu positionieren, die von den Stützen getragen wird, und/oder in der die Lademulde (1) und das Fahrgestell (2) Zentriermittel (11, 12; 24) umfassen, die eine Längs- und eine Querzentrierung der Lademulde (1) auf dem Fahrgestell (2) ermöglichen.

15. Beladungsanordnung nach einem der vorstehenden Ansprüche und umfassend sowohl die technischen Merkmale (a) als auch (b).

16. Verfahren zum Installieren und Koppeln einer Lademulde (1) mit einem Fahrgestell (2), das mittels einer Ladevorrichtung nach Anspruch 15 durchgeführt wird, wobei die Lademulde (1) auf Stützen (5A; 5B) angeordnet wird, wobei das Verfahren die folgenden aufeinanderfolgenden Schritte umfasst:
- das fahrbare Fahrgestell (2) wird unter der Lademulde (1) positioniert, wobei sich das fahrbare Fahrgestell (2) in der unteren Position befindet;
- das Fahrgestell (2) wird in die obere Position angehoben, um das Fahrgestell (2) mit den zweiten Kupplungsmitteln (4'), die an der Lademulde (1) befestigt sind, in Kontakt zu bringen oder um die zweiten Kupplungsmittel (4'), die am Fahrgestell (2) befestigt sind, mit der Lademulde (1) in Kontakt zu bringen, wobei die zweiten Kupplungsmittel (4') automatisch in der geschlossenen Position verriegeln, so dass die Lademulde (1) um die horizontale Drehachse (23) schwenkbar mit dem Fahrgestell (2) gekoppelt ist;
- die Stützen (5B), die den Teil der Lademulde (1) der bzw. in der Nähe der Gelenkachse(n) (23a) tragen, werden demontiert;
- die Stange (220) des Zylinders (22) wird mittels der gekoppelt Kupplungsmittel (4) automatisch mit der Lademulde (1) gekoppelt, indem der Hub der Stange (220) des Zylinders (22) gesteuert wird;
- die Ständer (5A), die den Teil der Lademulde (1) in der Nähe des Zylinders (22) tragen, werden demontiert, und die Stange (220) des Zylinders wird abgesenkt, wobei die Lademulde (1) auf dem Fahrgestell (2) aufliegt;
- das Fahrgestell (2) wird von der oberen und unteren Position auf die nominale Fahr-Zwischenposition abgesenkt.

17. Verfahren zum Trennen und Aufsetzen einer Lademulde (1), die auf einem Fahrgestell (2) angeordnet ist, auf Stützen (5A ; 5B), wobei das Verfahren mittels einer Ladeeinheit nach Anspruch 15 durchgeführt wird, wobei der Lademulde (1) mittels der ersten in ihrer geschlossenen Position verriegelten
Kupplungseinrichtung (4) schwenkbar mit der Stange (220) des Zylinders (22) gekoppelt ist, und wobei die Lademulde (1) mittels der zweiten in ihrer geschlossenen Position verriegelten Kupplungseinrichtung (4') mit dem Fahrgestell (2) gekoppelt ist, wobei das Verfahren die folgenden aufeinanderfolgenden Schritte umfasst:
- der Teil des Fahrgestells (2) im Bereich des Zylinders (22) wird angehoben, um ihn in die obere Position zu bringen;
- erste Stützen (5A) werden unter der Lademulde (1) in der Nähe des Zylinders (22) angebracht;
- die ersten Kupplungsmittel (4) werden entriegelt;
- der Teil des Fahrgestells (2) im Bereich des Zylinders (22) wird abgesenkt, um ihn in die untere Position zu bringen, um die Stange (220) des Zylinders (22) von der Lademulde (1) zu entkoppeln, und bis die Lademulde (1) auf den ersten Stützen (5A) auf dem Boden abgestützt ist;
- der Teil des Fahrgestells (2) im Bereich der Gelenkachse(n) (23a) wird angehoben, um ihn in die obere Position zu bringen;
- zweite Stützen (5B) werden unter der Lademulde (1) an den/in der Nähe der Gelenkachse(n) (23a) angebracht;
- die zweiten Kupplungsmittel (4') entriegelt sind;
- der Teil des Fahrgestells (2) im Bereich der Gelenkachse(n) (23a) wird abgesenkt, um ihn in die untere Position zu bringen, um die Lademulde (1) vom Fahrgestell (2) zu entkoppeln, und bis die Lademulde (1) auf dem ersten (5A) und zweiten (5B) Träger auf dem Boden steht,
- das Fahrgestell (2) wird so bewegt, dass es von der Unterseite der Lademulde (1), die auf dem ersten und zweiten Träger angeordnet ist, getrennt wird.

## Claims

1. Loading assembly comprising a rolling chassis (2) and a loading box (1) which is suitable for being removably mounted on the rolling chassis by being hinged so as to be able to rotate with respect to the rolling chassis (2) about a horizontal axis of rotation (23), and said rolling chassis (2) is provided with at least one jack (22) which comprises a movable rod (220) and which makes it possible, when the loading box (1) is mounted on the chassis (2) and is coupled to the movable rod (220) of the jack, for the loading box (1) to be pivoted relative to the chassis about said horizontal axis of rotation (23), **characterized in that** said assembly further comprises at least one of the following technical features (a) or (b):
(a) said assembly includes first, self-locking coupling means (4) which comprise first automatic locking means (405), said first coupling means (4) being suitable for adopting a locked closed position, under the effect of pressure exerted in a coupling direction (C) and with automatic locking in their closed position by the first locking means (405), the first coupling means (4) being secured to the loading box (1) or being secured to the rod (220) of the jack (22), such that the rod (220) of the jack is suitable for being moved, and preferably extended, so as to exert, on the first coupling means (4), pressure in the coupling direction (C) that automatically brings them into their locked closed position, in which they rotationally couple the rod (220) of the jack (22) to the loading box (1), the first coupling means (4) also being unlockable, so as to be able to decouple the rod (220) of the jack and the loading box (1) by moving the rod (220) of the jack relative to the loading box (1), and said assembly includes second coupling means (4') which make it possible to rotationally, and removably, couple the loading box (1) to the rolling chassis (2) about said horizontal axis of rotation (23), or
(b) said assembly includes first coupling means (4) which make it possible to rotationally and removably couple the rod (220) of the jack to the loading box (1), and second, self-locking coupling means (4') which comprise second locking means (405), said second coupling means (4') being suitable for adopting a locked closed position, under the effect of pressure exerted in a coupling direction (C) and with automatic locking in their closed position by the second locking means (405), the second coupling means (4') being secured to the loading box or being secured to the rolling chassis (2) such that the rolling chassis (2) is suitable for being moved so as to exert, on the second coupling means (4'), pressure in the coupling direction (C) that automatically brings them into their locked closed position, in which they rotationally couple the loading box (1) to the rolling chassis (2) about said axis of rotation (23), the second coupling means (4') also being unlockable, so as to be able to decouple the rolling chassis (2) and the loading box (1) by moving the rolling chassis relative to the loading box (1).

2. Loading assembly according to claim 1, wherein the second coupling means (4') are secured to the loading box (1) or are secured to the rolling chassis (2) such that said pressure in the coupling direction (C) can be exerted on the second coupling means (4') by moving the rolling chassis (2) upward, and the decoupling of the rolling chassis (2) and the loading box (1) can be achieved, once the second coupling means (4') have been unlocked, by lowering the rolling chassis.

3. Loading assembly according to any one of claim 1 or 2, comprising at least technical feature (a), wherein the first coupling means (4) are secured to the loading box (1), and preferably wherein the rod (220) of the jack (22) comprises a hinge pin (220a) and the first coupling means (4) comprise at least one pair of jaws (401; 402) which are secured to the loading box (1), which are hinged so as to be able to rotate between an open position and a closed position about the hinge pin of the rod (220) of the jack, and which are suitable for automatically pivoting from their open position to their closed position under the effect of pressure oriented in the coupling direction (C) and exerted by means of the hinge pin of the rod (220) of the jack (22), said first locking means (405) making it possible to automatically lock the jaws (401; 402) in the closed position about the hinge pin (220a) of the rod (220) of the jack.

4. Loading assembly according to any one of claim 1 or 2, comprising at least technical feature (a), wherein the first coupling means (4) are secured to the rod (220) of the jack (22), and preferably wherein the loading box (1) comprises a hinge pin and the first coupling means (4) comprise at least one pair of jaws (401; 402) which are secured to the rod (220) of the jack (22), which are hinged so as to be able to rotate between an open position and a closed position about the hinge pin of the loading box, and which are suitable for automatically pivoting from their open position to their closed position under the effect of pressure oriented in the coupling direction (C) and exerted by means of the hinge pin of the loading box (1), said first locking means (405) making it possible to automatically lock the two jaws in the closed position about said hinge pin.

5. Loading assembly according to any one of the preceding claims, comprising at least technical feature (b), wherein the second coupling means (4') are secured to the loading box (1), and preferably wherein the rolling chassis (2) comprises at least one hinge pin (23a) defining said horizontal axis of rotation (23) of the loading box (1) with respect to the rolling chassis (2), and wherein the second coupling means (4') comprise at least one pair of jaws (401; 402) which are secured to the loading box (1), which are hinged so as to be able to rotate between an open position and a closed position about the hinge pin (23a) of the rolling chassis (2), and which are suitable for automatically pivoting from their open position to their closed position under the effect of pressure oriented in the coupling direction (C) and exerted by means of the hinge pin (23a) of the rolling chassis (2), said first locking means (405) making it possible to automatically lock the two jaws in the closed position about the hinge pin (23a) of the rolling chassis (2).

6. Loading assembly according to any one of claims 1 to 4, comprising at least technical feature (b), wherein the second coupling means (4') are secured to the rolling chassis (2), and preferably wherein the loading box (2) comprises at least one hinge pin (23a) defining said horizontal axis of rotation (23) of the loading box (1) with respect to the rolling chassis (2), and wherein the second coupling means (4') comprise at least one pair of jaws (401; 402) which are secured to the rolling chassis (2), which are hinged so as to be able to rotate between an open position and a closed position about the hinge pin (23a) of the loading box (1), and which are suitable for automatically pivoting from their open position to their closed position under the effect of pressure oriented in the coupling direction (C) and exerted by means of the hinge pin (23a) of the loading box (1), said first locking means (405) making it possible to automatically lock the two jaws in the closed position about the hinge pin (23a) of the rolling chassis (2).

7. Loading assembly according to any one of claim 5 or 6, wherein the second coupling means (4') comprise at least two pairs of jaws (401; 402), which are spaced and aligned.

8. Loading assembly according to any one of claims 3, 4, 5 or 6, wherein the jaws (401; 402) are elastically held in the open position when they are no longer locked in the closed position.

9. Loading assembly according to any one of claims 3, 4, 5 or 6, wherein the first locking means (405) and/or the second locking means (405) comprise a pivoting latch (405a) which is suitable for being rotated to a locking position by a first jaw (402) when the jaws (401; 402) pivot from their open position to their closed position, and which makes it possible, in this locking position, for the two jaws (401; 402) to be blocked against rotation in the closed position, and wherein the latch (405a) can be rotationally actuated, in particular manually, to an unlocking position in which the two jaws (401; 402) are not blocked against rotation.

10. Loading assembly according to claim 9, wherein the second jaw (401) comprises a locking groove (401c), wherein the pivoting latch (405a) receives a sliding shaft (405b) which is elastically returned into an engaged position by an elastic return means, in the form of a compression spring, wherein the pivoting latch (405a), in combination with the elastic return means of the shaft (405b), is suitable, during its rotation into its locking position, for driving the shaft (405b) into the locking groove (401c) when the jaws (401; 402) pivot from their open position to their closed position, wherein the shaft (405b), once positioned in the locking groove (401c), makes it possible to connect the latch (405) and the second jaw (401) for conjoint rotation, and wherein, when the jaws (401, 402) are locked, the shaft (405b) can be actuated, in particular manually, so as to slide out of said locking groove (401c) and the latch (405) can be pivoted relative to the second jaw (401) so as to rotationally unlock the jaws (401; 402).

11. Assembly according to claim 10, wherein the second jaw (401) also comprises an unlocking groove (401d), wherein the pivoting latch (405a), in combination with the elastic return means of the shaft (405b), is suitable, during its forced rotation for unlocking the jaws (401; 402), for driving the shaft (405b) into the unlocking groove (401d), and wherein the shaft (405b), once positioned in the unlocking groove (401d), makes it possible to connect the latch (405) and the second jaw (401) for conjoint rotation, the two jaws (401; 402) being rotationally unlocked.

12. Assembly according to any one of claim 10 or 11, wherein the latch (40a) is provided with an elastic return means, in the form of a torsion spring, which makes it possible to pivot the latch (405a) resting on the two jaws (401; 402) in order to hold them in abutment in the open position.

13. Assembly according to any one of claims 10 to 12, wherein, once the two jaws (401, 402) are locked in the closed position, with the shaft (405b) positioned in the locking groove (401c) of the second jaw (401), the second jaw (401) is rotationally locked in both directions with respect to the latch (405a), and the latch (405a) blocks the first jaw (402) against rotation in the direction of rotation of its opening and the first jaw (402) blocks the second jaw (401) against rotation in the direction of rotation of its closure.

14. Loading assembly according to any one of the preceding claims, comprising struts (5A; 5B) for supporting the loading box (1) on the ground by raising it to a height sufficient to allow positioning of the rolling chassis (2) beneath the loading box (1) supported by said struts, and/or wherein the loading box (1) and the rolling chassis (2) comprise centering means (11, 12; 24) which make longitudinal centering and lateral centering of the loading box (1) on the rolling chassis (2) possible.

15. Loading assembly according to any one of the preceding claims and comprising both technical features (a) and (b).

16. Method for placing a loading box (1) on a rolling chassis (2) and coupling it thereto, implemented by means of a loading assembly according to claim 15, the loading box (1) being placed on struts (5A; 5B), said method comprising the following successive steps:
- positioning the rolling chassis (2) beneath the loading box (1), said rolling chassis (2) being in a lowered position;
- raising the rolling chassis (2) into an elevated position so as to bring the rolling chassis (2) into contact with the second coupling means (4') secured to the loading box (1), or so as to bring the second coupling means (4') secured to the rolling chassis (2) into contact with the loading box (1), which second coupling means (4') automatically lock in the closed position such that the loading box (1) is rotationally coupled to the rolling chassis (2) about said horizontal axis of rotation (23);
- removing the struts (5B) supporting the part of the loading box (1) close to the hinge pin(s) (23a);
- automatically coupling the rod (220) of the jack (22) to the loading box (1) by means of the first coupling means (4), by extending the rod (220) of the jack (22);
- removing the struts (5A) supporting the part of the loading box (1) close to the jack (22), and lowering the rod (220) of the jack, the loading box (1) resting on the rolling chassis (2);
- lowering the rolling chassis (2) into an intermediate nominal running position between the elevated and lowered positions.

17. Method for decoupling a loading box (1) placed on a rolling chassis (2) and leaving it on struts (5A; 5B), said method being implemented by means of a loading assembly according to claim 15, said loading box (1) being rotationally coupled to the rod (220) of the jack (22) by means of the first coupling means (4) locked in their closed position, and said loading box (1) being coupled to the rolling chassis (2) by means of the second coupling means (4') locked in their closed position, said method comprising the following successive steps:
- raising the part of the rolling chassis (2) in the region of the jack (22) in order to bring it into an elevated position;
- installing first struts (5A) beneath the loading box (1) close to the jack (22);
- unlocking the first coupling means (4);
- lowering said part of the rolling chassis (2) in the region of the jack (22) in order to bring it into a lowered position so as to decouple the rod (220) of the jack (22) from the loading box (1), and until the loading box (1) stands on the ground via the first struts (5A);
- raising the part of the rolling chassis (2) in the region of the hinge pin(s) (23a) in order to bring it into the elevated position;
- installing second struts (5B) beneath the loading box (1) close to the hinge pin(s) (23a);
- unlocking the second coupling means (4');
- lowering said part of the rolling chassis (2) in the region of the hinge pin(s) (23a) in order to bring it into the lowered position, so as to decouple the loading box (1) from the rolling chassis (2), and until the loading box (1) stands on the ground via the first (5A) and second (5B) struts,
- moving the chassis (2) so as to disengage it from beneath the loading box (1) placed on the first and second struts.
